# EUROPEAN PATENT APPLICATION

(11) **EP 4 636 631 A1**
(43) Date of publication of application: **22.10.2025**
(21) Application number: 23903139.6
(22) Date of filing: 01.11.2023
(51) Int. Cl.: G06F 21/62, G06F 21/55

(54) **ACCESS PERMISSION DEVICE AND ACCESS PERMISSION METHOD**

(30) Priority: 13.12.2022 WO PCT/JP2022/045939
(71) Applicant: Panasonic Intellectual Property Management Co., Ltd., Kadoma-shi, Osaka 571-0057 (JP)
(72) Inventor: KISHIKAWA, Takeshi, Kadoma-shi, Osaka 571-0057 (JP); UJIIE, Yoshihiro, Kadoma-shi, Osaka 571-0057 (JP); HAGA, Tomoyuki, Kadoma-shi, Osaka 571-0057 (JP)
(74) Representative: Grünecker Patent- und Rechtsanwälte PartG mbB
(86) International application number: PCT/JP2023/039441
(87) International publication number: WO 2024/127841

(57) **Abstract**

An access permission device includes: an obtainer that obtains, from an access source, an access request to access an access destination included in a mobility entity; and a permitter that permits the access source to access a function of the access destination, based on a first verification result of first verification of a security status of the access source and a second verification result of second verification of a security status of the mobility entity. The security status of the mobility entity depends on the function of the access destination.

## Description

### [Technical Field]

The present disclosure relates to an access permission device and an access permission method.

### [Background Art]

To reduce a security risk, a concept called zero trust architecture has been developed (see Non Patent Literature (NPL) 1, for example). The conventional approach by the zero trust architecture is to determine, based on information on an access source, whether to permit the access source to access a resource (that is, an access destination) of the access source.

### [Citation List]

### [Non Patent Literature]

[NPL 1] Scott Rose, Oliver Borchert, Stu Mitchell, Sean Connelly, "Zero Trust Architecture", NIST Special Publication 800-207 (https://doi.org/10.6028/NIST.SP.800-207)

### [Summary of Invention]

### [Technical Problem]

Zero trust architecture can be applied to a resource that is a mobility entity, such as a vehicle. When the zero trust architecture is applied to the resource that is the mobility entity, it is desired to increase the security of the mobility entity, or more specifically, to easily keep the mobility entity secure.

The present disclosure provides an access permission device and so forth that are capable of easily keeping a mobility entity secure.

### [Solution to Problem]

According to an aspect of the present disclosure, an access permission device includes: an obtainer that obtains, from an access source, an access request to access an access destination included in a mobility entity; and a permitter that permits the access source to access a function of the access destination, based on a first verification result of first verification of a security status of the access source and a second verification result of second verification of a security status of the mobility entity, the security status of the mobility entity depending on the function of the access destination.

According to another aspect of the present disclosure, an access permission method is executed by a computer and includes: obtaining, from an access source, an access request to access an access destination included in a mobility entity; and permitting the access source to access a function of the access destination, based on a first verification result of first verification of a security status of the access source and a second verification result of second verification of a security status of the mobility entity, the security status of the mobility entity depending on the function of the access destination.

According to still another aspect of the present disclosure, a program is for causing a computer to execute the access permission method according to the above aspect of the present disclosure.

### [Advantageous Effects of Invention]

The access permission device according to one aspect of the present disclosure is capable of easily keeping the mobility entity secure.

### [Brief Description of Drawings]

[FIG. 1]

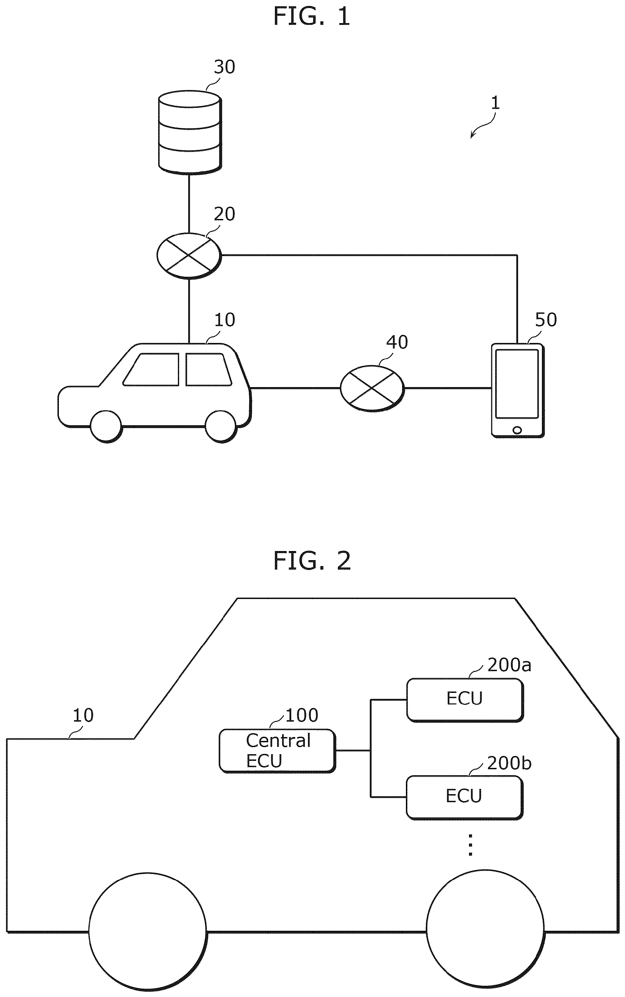

   FIG. 1 is a diagram of an overall configuration of a connected car system according to Embodiment.
[FIG. 2]
   FIG. 2 is a diagram of a configuration of a vehicle according to Embodiment.
[FIG. 3]

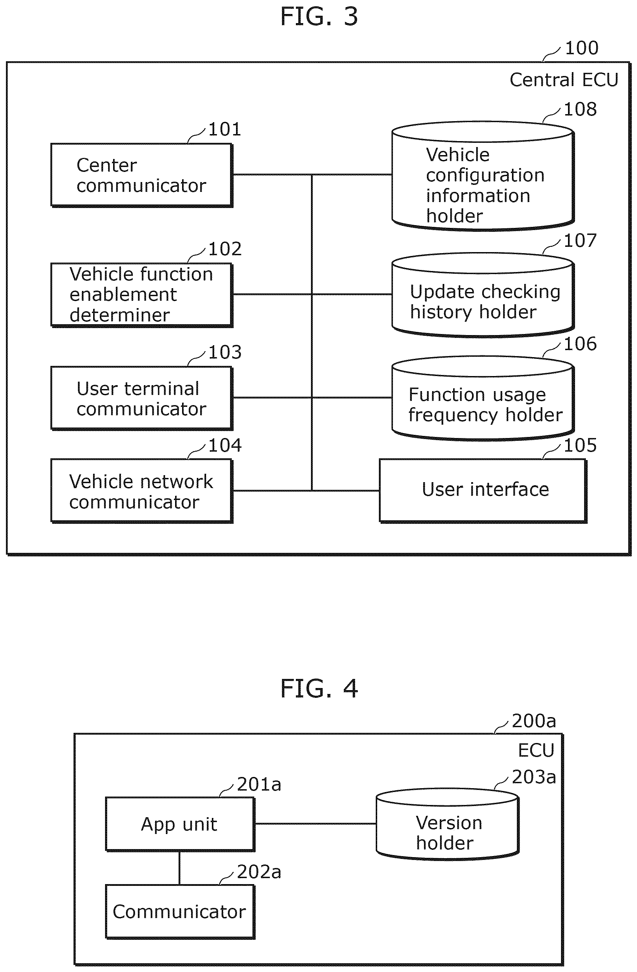

   FIG. 3 is a block diagram of a functional configuration of a central ECU according to Embodiment.
[FIG. 4]
   FIG. 4 is a block diagram of a functional configuration of an ECU according to Embodiment.
[FIG. 5]

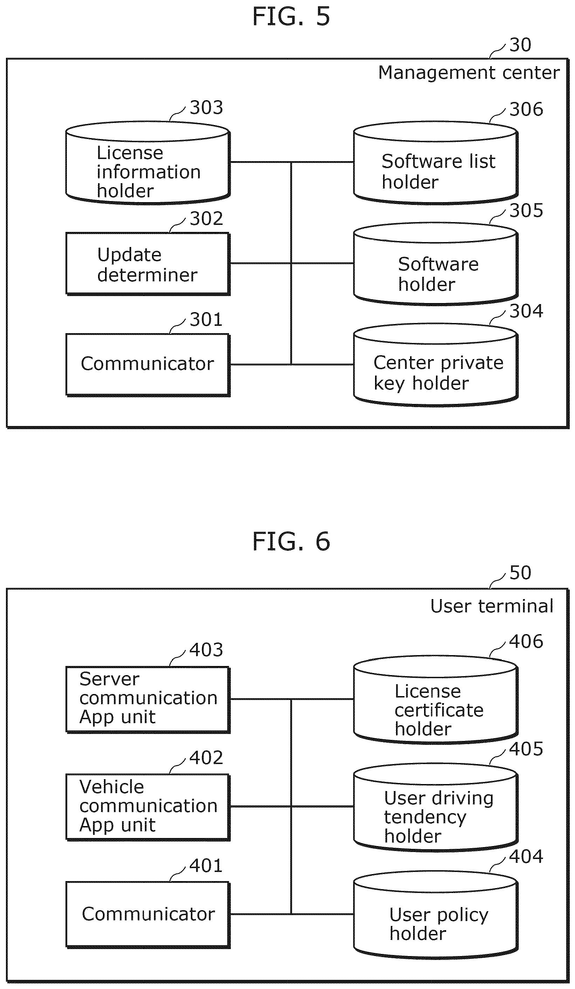

   FIG. 5 is a block diagram of a functional configuration of a management center according to Embodiment.
[FIG. 6]
   FIG. 6 is a block diagram of a functional configuration of a user terminal according to Embodiment.
[FIG. 7]

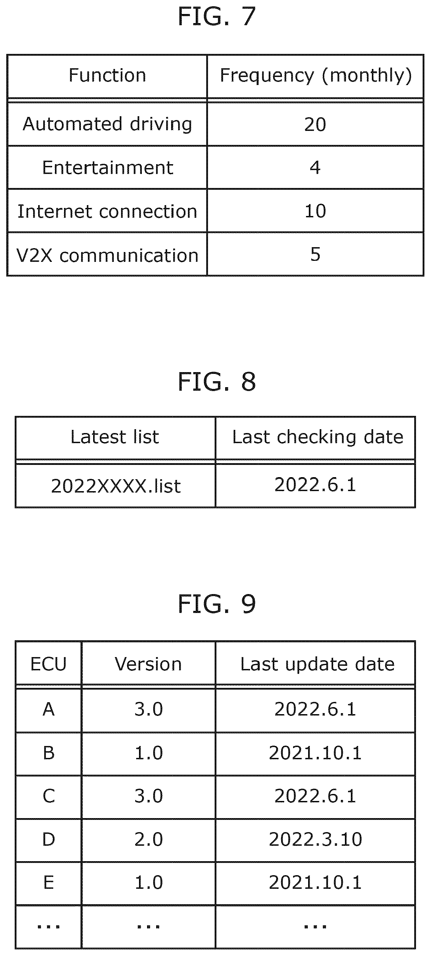

   FIG. 7 is a diagram illustrating an example of function usage frequency information according to Embodiment.
[FIG. 8]
   FIG. 8 is a diagram illustrating an example of update checking history information according to Embodiment.
[FIG. 9]
   FIG. 9 is a diagram illustrating an example of vehicle configuration information according to Embodiment.
[FIG. 10]

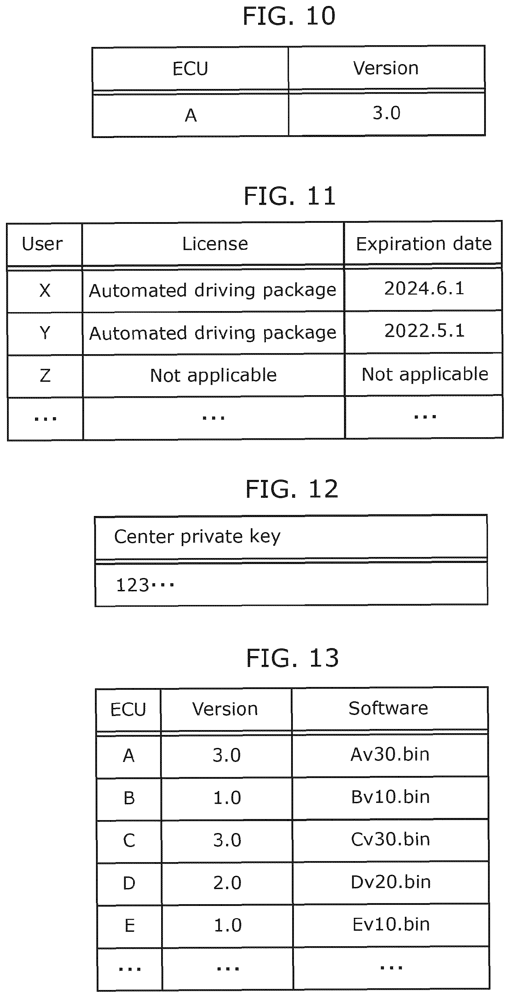

   FIG. 10 is a diagram illustrating an example of version information of software according to Embodiment.
[FIG. 11]
   FIG. 11 is a diagram illustrating an example of license information according to Embodiment.
[FIG. 12]
   FIG. 12 is a diagram illustrating an example of a center private key according to Embodiment.
[FIG. 13]
   FIG. 13 is a diagram illustrating an example of software according to Embodiment.
[FIG. 14]

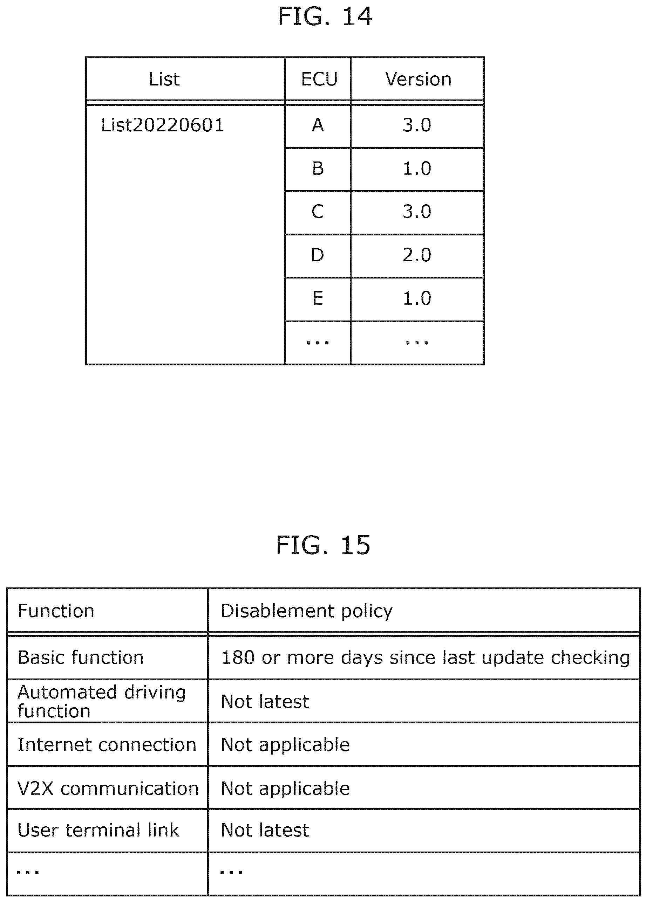

   FIG. 14 is a diagram illustrating an example of latest version list information of software according to Embodiment.
[FIG. 15]
   FIG. 15 is a diagram illustrating an example of a user policy according to Embodiment.
[FIG. 16]

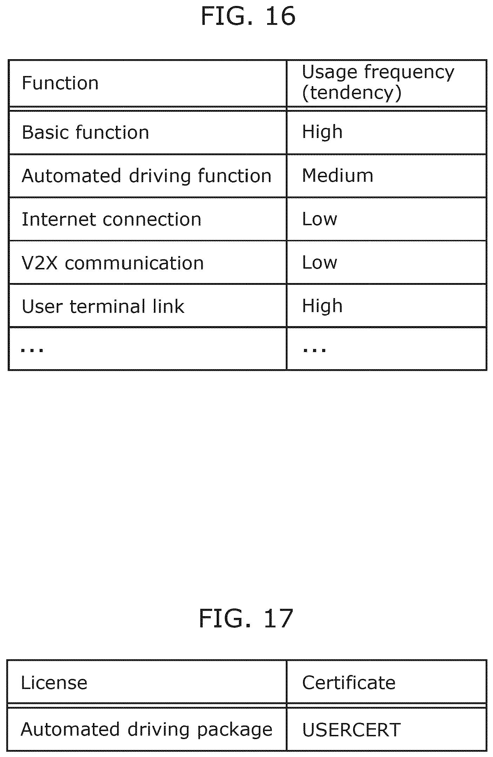

   FIG. 16 is a diagram illustrating an example of user driving tendency information according to Embodiment.
[FIG. 17]
   FIG. 17 is a diagram illustrating an example of a license certificate according to Embodiment.
[FIG. 18]

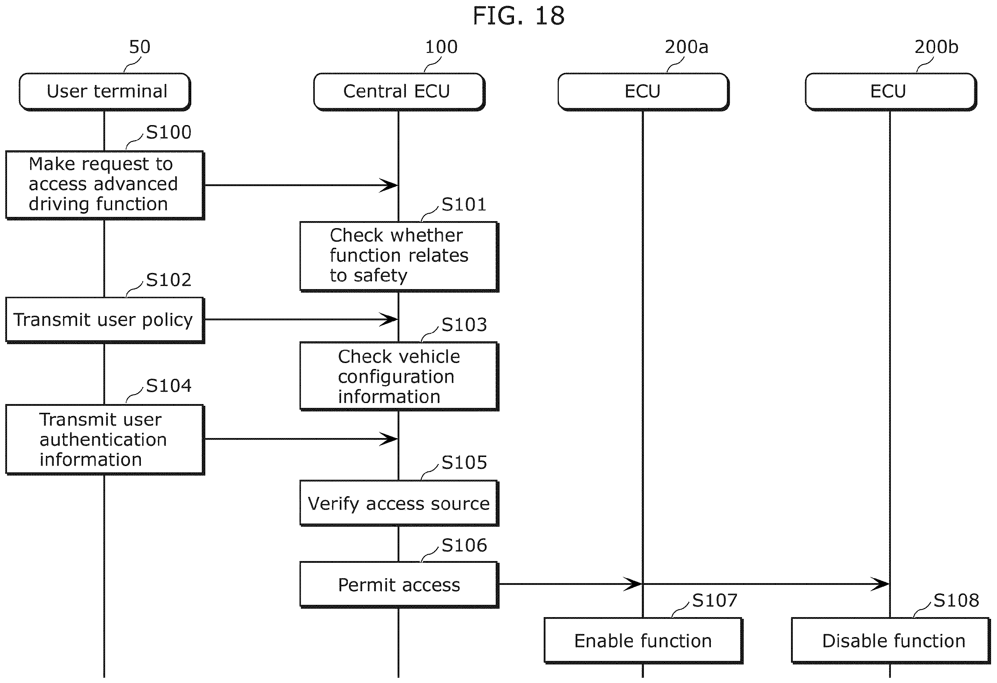

   FIG. 18 is a sequence diagram illustrating a procedure for access permission processing according to Embodiment.
[FIG. 19]

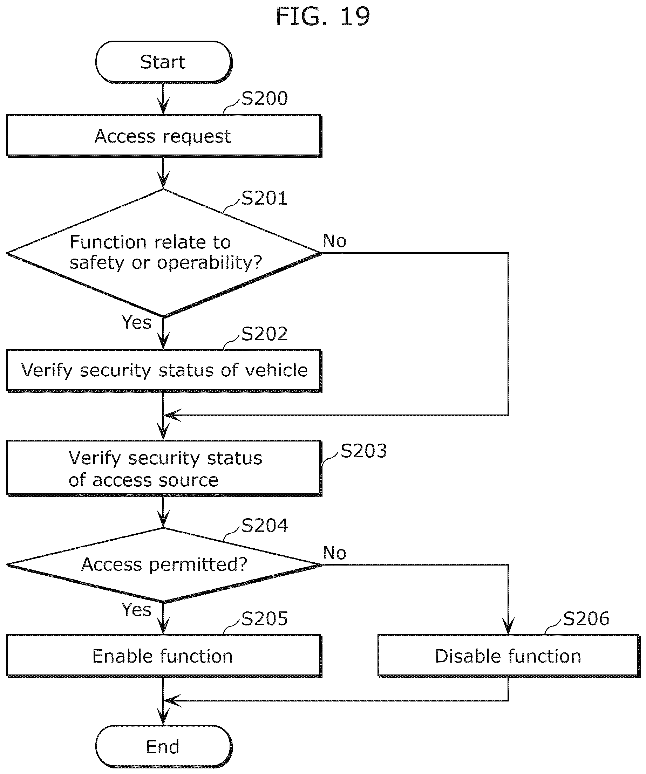

   FIG. 19 is a flowchart of a procedure for processing performed by the central ECU according to Embodiment.
[FIG. 20]

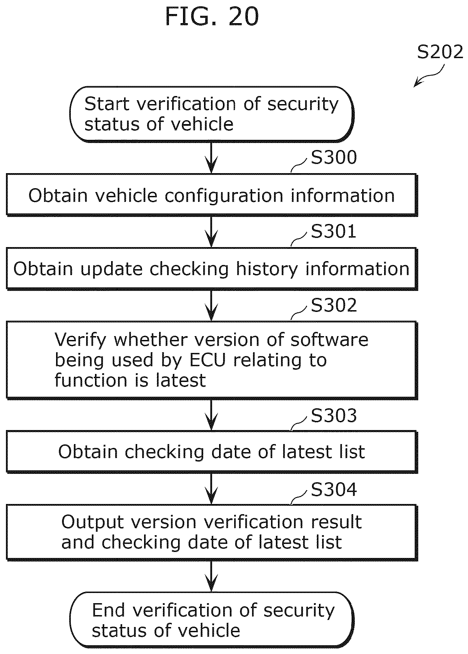

   FIG. 20 is a flowchart illustrating, in more detail, processing performed by the central ECU to verity the security status of the vehicle, according to Embodiment.
[FIG. 21]

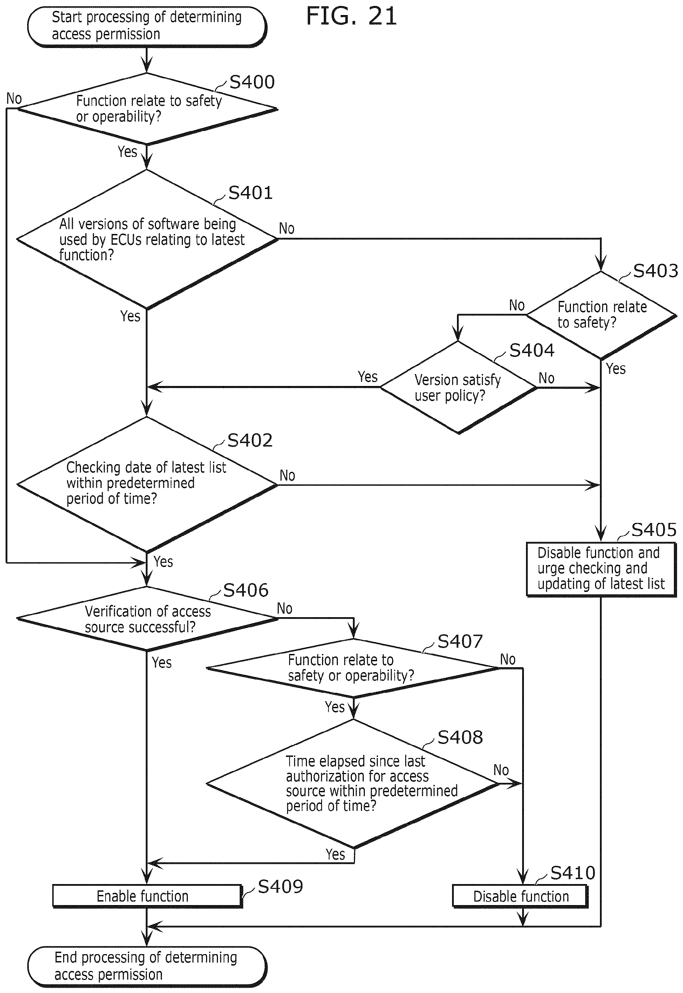

   FIG. 21 is a flowchart illustrating, in more detail, processing performed by the central ECU to determine the access permission according to Embodiment.
[FIG. 22]

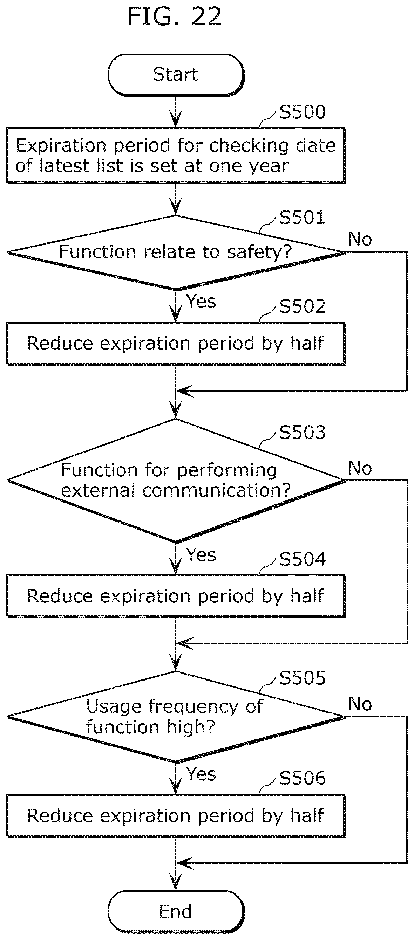

   FIG. 22 is a flowchart of processing to determine an expiration period for the checking date of the latest list, according to Embodiment.
[FIG. 23]

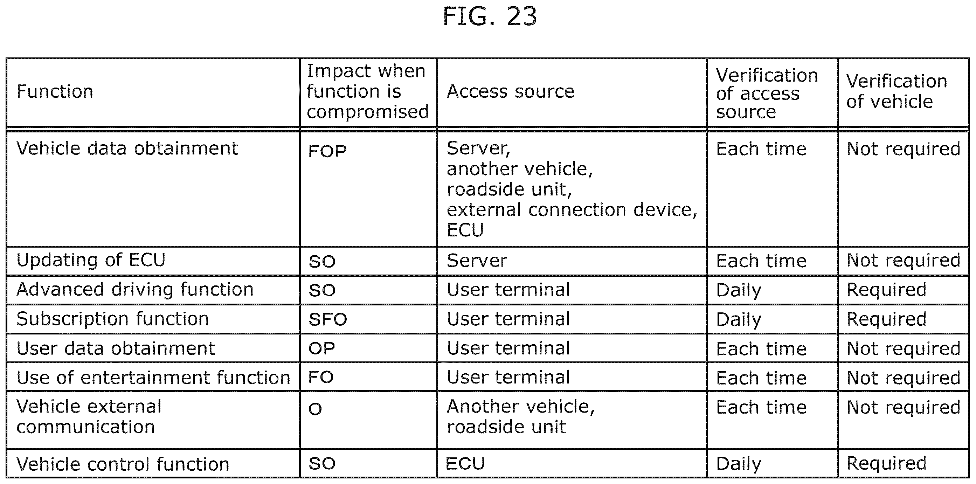

   FIG. 23 is a diagram illustrating an example of a relationship between function of the vehicle and impact that occurs when the function is compromised, according to Embodiment.
[FIG. 24]

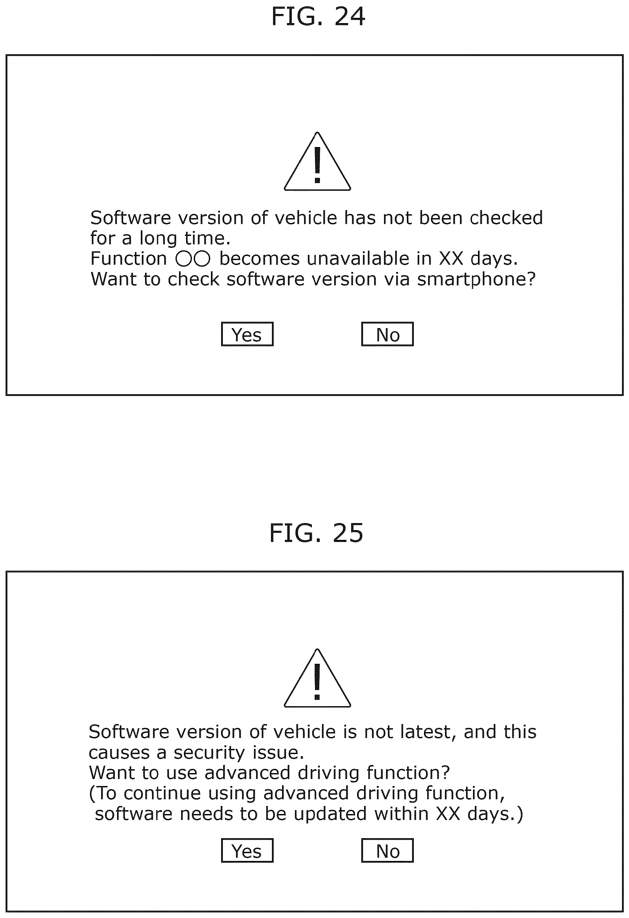

   FIG. 24 is a diagram illustrating an example of warning display based on an update checking date of a version of software of the vehicle, according to Embodiment.
[FIG. 25]
   FIG. 25 is a diagram illustrating an example of warning display based on an update checking date of a version of software of the vehicle, according to Embodiment.
[FIG. 26]

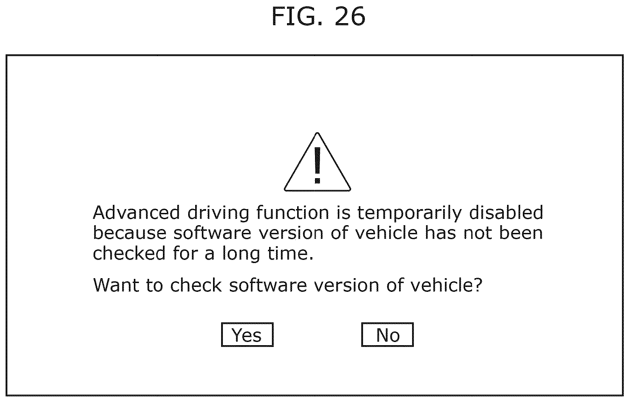

   FIG. 26 is a diagram illustrating an example of a function disablement notice based on an update checking date of a version of software of the vehicle, according to Embodiment.
[FIG. 27]

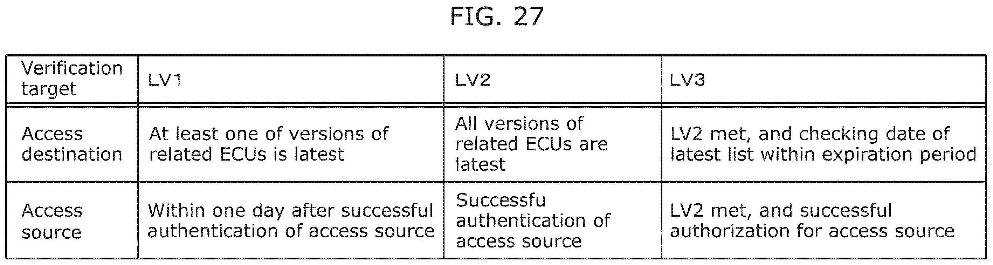

   FIG. 27 is a diagram illustrating an example of verification levels of the security status of the vehicle and the security status of an access source, according to Embodiment.
[FIG. 28]

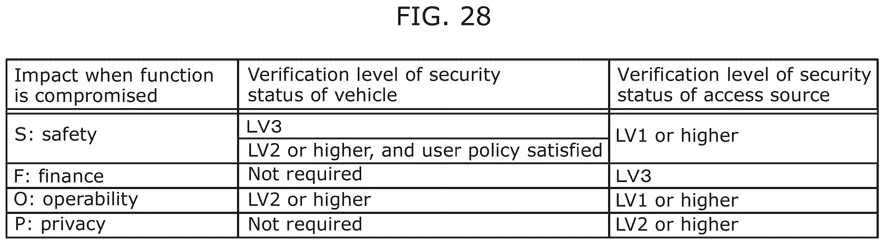

   FIG. 28 is a diagram illustrating an example of a required verification level for each of functions of an access destination, according to Embodiment.
[FIG. 29]

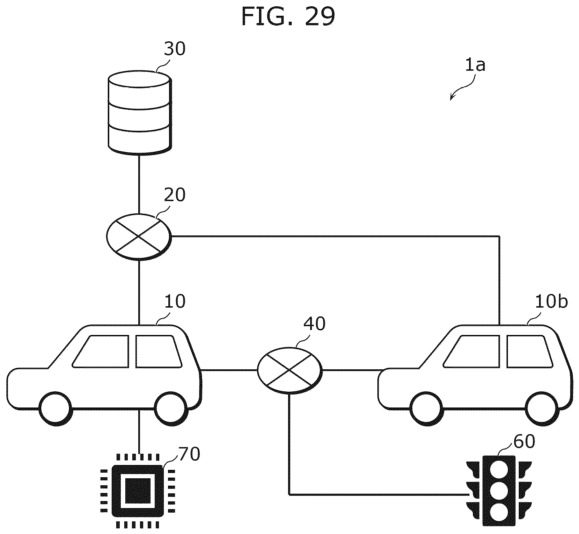

   FIG. 29 is a diagram of an overall configuration of a connected car system according to Variation.
[FIG. 30]

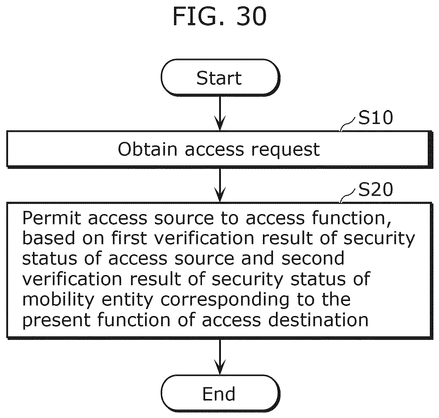

   FIG. 30 is a flowchart of a procedure for processing performed by an access permission device according to Embodiment.

### [Description of Embodiment]

The following describes Embodiment according to the present disclosure with reference to the drawings.

The following embodiments are specific examples of the present disclosure. The numerical values, shapes, materials, constituent elements, arrangement and connection configuration of the constituent elements, steps, the order of the steps, etc., described in the following embodiment are merely examples, and are not intended to limit the present disclosure. Those skilled in the art will readily appreciate that embodiments arrived at by making various modifications to the above embodiment without materially departing from the scope of the present disclosure may be included within one or more aspects of the present disclosure.

Furthermore, in the present specification, ordinal numbers, such as "first" and "second", do not mean the number or order of components, unless otherwise specified. The ordinal numbers are used to avoid confusion and distinguish components of the same kind.

Furthermore, in the present specification, expressions like "more than or equal to a threshold value" and "less than a threshold value" are used to draw a distinction with respect to the threshold value as the boundary. Thus, "more than or equal to a threshold value" may mean "more than a threshold value" and "less than a threshold value" may mean "less than or equal to a threshold value".

### [Embodiment 1]

### [Configuration]

A configuration of connected car system 1 according to Embodiment is first described.

FIG. 1 is a diagram of an overall configuration of connected car system 1 according to Embodiment.

Connected car system 1 is a system in which vehicle 10, management center 30, and user terminal 50 communicate with each other. For example, vehicle 10 and user terminal 50 communicate wirelessly with management center 30 via network 20. Furthermore, for example, vehicle 10 and user terminal 50 communicate wirelessly with each other via network 40. A user of vehicle 10 operates user terminal 50 to cause vehicle 10 to communicate with management center 30, and thereby causes vehicle 10 to perform, for example, update of software used by vehicle 10.

Network 20 is a wireless communication network on which wireless communication is performed according to a communication standard, such as the 3G or 4G standard or Wi-Fi (registered mark).

Network 40 is a near field communication network on which wireless communication is performed according to a communication standard, such as Bluetooth (registered mark).

Connected car system 1 includes vehicle 10, management center 30, and user terminal 50.

Vehicle 10 is used by the user. Vehicle 10 is an automobile for example, and may be a motorcycle. Vehicle 10 may be an automatically driven vehicle or a manually driven vehicle. By communicating with vehicle 10, each of management center 30 and user terminal 50 accesses a function of vehicle 10. Vehicle 10 is an example of a mobility entity.

Management center 30 is a sever of a maker of vehicle 10, for example. Management center 30 includes information that includes update information of software of vehicle 10. By communicating with vehicle 10, management center 30 updates the software used by vehicle 10, for example. For example, management center 30 is implemented by: a communication interface for communicating with vehicle 10 and user terminal 50; a nonvolatile memory for storing a program; a volatile memory that is a temporary storage area for executing a program; an input-output port for transmitting and receiving signals; and a processor that executes a program. The communication interface is implemented by an antenna and a wireless communication circuit that enable wireless communication, for example. Note that, for management center 30 that communicates with vehicle 10 and user terminal 50 via a modem for instance, the communication interface may be implemented by a connector that is connected to a communication line for enabling wired communication. Management center 30 is a personal computer, for example. Management center 30 may be a smartphone or a tablet, for example.

User terminal 50 is a computer used by the user. By communicating with vehicle 10, user terminal 50 requests access to a function of vehicle 10, for example. For example, user terminal 50 is implemented by: a communication interface for communicating with vehicle 10 and management center 30; a nonvolatile memory for storing a program; a volatile memory that is a temporary storage area for executing a program; an input-output port for transmitting and receiving signals; and a processor that executes a program. The communication interface is implemented by an antenna and a wireless communication circuit that enable wireless communication, for example. Note that when vehicle 10 and user terminal 50 are connectable via a communication line, the communication interface may be implemented by a connector that is connected to a communication line for enabling wired communication. In the present embodiment, user terminal 50 is a smartphone. User terminal 50 may be a computer, such as a personal computer or a tablet.

FIG. 2 is a diagram of a configuration of vehicle 10 according to Embodiment. To be more specific, FIG. 2 is a diagram of an in-vehicle communication network system included in vehicle 10 (that is, an internal network of vehicle 10).

Vehicle 10 includes central ECU 100 and a plurality of ECUs. Central ECU 100 and the plurality of ECUs are communicatively connected via an in-vehicle communication network.

The in-vehicle communication network is, for example, a network on which ECUs connected via a bus communicate with each other according to a communication standard, such as a controller area network (CAN) or Ethernet (registered mark).

Note that the number of ECUs included in vehicle 10 is not intended to be particularly limiting. The present embodiment describes ECU 200a and ECU 200b included among the plurality of ECUs included in vehicle 10.

Central ECU 100 is an electronic control unit (ECU) that communicates with a device external to vehicle 10, such as management center 30 or user terminal 50, and that also communicates with ECU 200a and ECU 200b. Note that central ECU 100 is an example of an access permission device. Central ECU 100 includes a communication interface for communicating with a device external to vehicle 10. For example, when access to a function of vehicle 10 is requested by the device external to vehicle 10 (or more specifically, when information that requests access is received), central ECU 100 permits (authorizes) the access. To be more specific, when obtaining, from the device external to vehicle 10, information about use of a function executed by a device included in vehicle 10, such as ECU 200a or ECU 200b, that is, when access to the function is requested, central ECU 100 determines whether to allow the use of the function.

For example, central ECU 100 is implemented by: a communication interface (a communication module), such as a telematics control unit (TSU), for communicating with a device, such as management center 30 or user terminal 50, that is external to vehicle 10; a communication interface for communicating with ECU 200a and ECU 200b via the in-vehicle communication network; a processor; and a memory that stores software (a control program) executed by the processor.

Each of ECU 200a and ECU 200b is communicatively connected to the in-vehicle network and executes a function of vehicle 10. Each of the plurality of ECUs included in vehicle 10 achieves (executes) a corresponding function of vehicle 10, such as: drive control over acceleration and braking of vehicle 10; control over a display included in vehicle 10; control over an air conditioner included in vehicle 10; or control over an audio device included in vehicle 10. For example, when causing vehicle 10 to control the air conditioner, the user operates user terminal 50 to access an air conditioning function that is an example of the function of vehicle 10. Central ECU 100 determines whether to permit the access. When central ECU 100 permits the access, the ECU that executes the air conditioning function executes the air conditioning function by controlling the air conditioner of vehicle 10 according to details accessed (for example, execution of cooling operation). In contrast, when central ECU 100 does not permit the access, the ECU that executes the air conditioning function does not control the air conditioner of vehicle 10 according to the details accessed.

Each of ECU 200a and ECU 200b is implemented by: a communication interface for communicating with a device, such as central ECU 100 or another ECU included in vehicle 10, via the in-vehicle communication network; a processor; and a memory that stores software executed by the processor.

Note that the aforementioned function of permitting the access may be provided by a device, such as ECU 200a or ECU 200b, other than central ECU 100.

FIG. 3 is a block diagram of a functional configuration of central ECU 100 according to Embodiment.

Central ECU 100 includes center communicator 101, vehicle function enablement determiner 102, user terminal communicator 103, vehicle network communicator 104, user interface 105, function usage frequency holder 106, update checking history holder 107, and vehicle configuration information holder 108.

Center communicator 101 is a communication interface for communicating with management center 30.

Vehicle function enablement determiner 102 is a processor that determines whether to permit access to a function of vehicle 10. Note that vehicle function enablement determiner 102 is an example of an obtainer and a permitter. Vehicle function enablement determiner 102 obtains, from an access source, an access request to access an access destination included in vehicle 10. Vehicle function enablement determiner 102 permits the access source to access a function of the access destination, based on a first verification result of a security status of the access source and a second verification result of a security status of vehicle 10, the security status of vehicle 10 depending on the function. To be more specific, when obtaining, from the access source, the access request to access the access destination included in vehicle 10, vehicle function enablement determiner 102 determines whether to permit the access source to access the function of the access destination, based on the first verification result indicating a result of the verification of the security status of the access source and the second verification result indicating a result of the verification of the security status of vehicle 10, the security status of vehicle 10 depending on the function.

The access source is a device, such as user terminal 50, that is external to vehicle 10. The access destination is a device, such as ECU 200a, that is included in vehicle 10 and communicatively connected to the in-vehicle communication network. The function of the access destination is executed by, for example, ECU 200a. The access request is information for allowing the access source to cause the access destination to execute the aforementioned function or change the details of the aforementioned function, for example. For example, when obtaining the access request via user terminal communicator 103, vehicle function enablement determiner 102 determines whether to permit the access source to access the function of the access destination, based on the first verification result and the second verification result. When vehicle function enablement determiner 102 determines to permit the access, the access destination executes this function based on the information from the access source, for example. In contrast, when vehicle function enablement determiner 102 determines not to permit the access, the access destination does not execute this function.

Note that in the following description of Embodiment, the access destination may be ECU 200a and/or ECU 200b. The access destination may be any component that is included in vehicle 10.

Furthermore, vehicle function enablement determiner 102 performs verification of a security status, for example. The verification of the security status is performed by determining whether a predetermined condition is satisfied, for example. When each of the first verification result and the second verification result is determined to satisfy a corresponding predetermined condition, vehicle function enablement determiner 102 permits the access. In other words, when the first verification result satisfies the predetermined condition (a first predetermined condition) and the second verification result satisfies the predetermined condition (a second predetermined condition), vehicle function enablement determiner 102 permits the access source to access this function.

In contrast, when at least one of the first verification result or the second verification result is determined not to satisfy the corresponding predetermined condition, vehicle function enablement determiner 102 does not permit the access. The predetermined conditions may be individually freely set for the verification of the security status of the access source and for the verification of the security status of vehicle 10, the security status of vehicle 10 depending on the function of the access destination. More specifically, the first predetermined condition and the second predetermined condition may be the same or different.

For example, vehicle function enablement determiner 102 performs the verification of the security status of vehicle 10, based on whether software installed on ECU 200a of vehicle 10 that is the access destination (or more specifically, the software that is stored in the memory of ECU 200a and used by ECU 200a) is latest. Furthermore, for example, vehicle function enablement determiner 102 performs the verification of the security status of vehicle 10, based on an elapsed time since the last checking of the latest version of the software installed on ECU 200a of vehicle 10 that is the access destination.

The version of the software installed on ECU 200a is the version of the software that is stored in the memory of ECU 200a and used in processing performed by ECU 200a, for example. Note that vehicle 10 may include a timer, such as a real time clock (RTC), that measures time. Information relating to time may be obtained from management center 30, for example.

Furthermore, for example, vehicle function enablement determiner 102 performs the verification of the security status of vehicle 10 by determining whether the version of the software installed on ECU 200a is latest. When the version is not latest, vehicle function enablement determiner 102 determines that the second verification result does not satisfy the predetermined condition and thus does not permit the access. In contrast, when the version is latest, vehicle function enablement determiner 102 determines that the second verification result satisfies the predetermined condition.

Furthermore, for example, vehicle function enablement determiner 102 performs the verification of the security status of vehicle 10 by determining whether the elapsed time since the last checking of the latest version of the software installed on ECU 200a is more than or equal to a predetermined period of time. When the elapsed time is determined to be more than or equal to the predetermined period of time, vehicle function enablement determiner 102 determines that the second verification result does not satisfy the predetermined condition and thus does not permit the access. In contrast, when the elapsed time is determined to be less than the predetermined period of time, vehicle function enablement determiner 102 determines that the second verification result satisfies the predetermined condition. Note that the predetermined period of time may be freely set.

Furthermore, for example, vehicle function enablement determiner 102 further determines a threshold value (for example, the aforementioned predetermined period of time) of the elapsed time since the last checking of the latest version of the software installed on ECU 200a of vehicle 10, according to a usage frequency of the function of the access destination (for example, function usage frequency information described later). In this case, vehicle function enablement determiner 102 performs the verification of the security status of vehicle 10, based on the elapsed time since the last checking of the latest version of the software installed on ECU 200a of vehicle 10 and the threshold value, for example. Information indicating a relationship between the usage frequency and the threshold value may be freely set, and is not intended to be particularly limiting. The information indicating this relationship is stored beforehand in the memory of central ECU 100, for example. Vehicle function enablement determiner 102 determines, based on this information, whether the elapsed time is more than or equal to the threshold value, for example. For example, when the elapsed time is determined to be more than or equal to the threshold value, vehicle function enablement determiner 102 determines that the second verification result does not satisfy the predetermined condition. In contrast, for example, when the elapsed time is determined to be less than the threshold value, vehicle function enablement determiner 102 determines that the second verification result satisfies the predetermined condition.

Furthermore, for example, vehicle function enablement determiner 102 performs the verification of the security status of the access source by performing authentication of the access source and authorization for the access source. The authentication of the access source is performed by determining whether a user of the access source is a predetermined user, for example. The authorization for the access source is performed by determining whether the user of the access source has authorization to access this function, for example. More specifically, vehicle function enablement determiner 102 performs the verification of the security status of the access source by determining whether the user of the access source is the predetermined user and whether the user of the access source has the authorization to access the function of vehicle 10, for example. For example, the predetermined user and the authorization for the user are predetermined. Information indicating these is stored beforehand in the memory of central ECU 100.

For example, vehicle function enablement determiner 102 performs the verification of the security status of the access source by determining whether the user of the access source is the predetermined user and whether the user of the access source has the authorization to access this function. When it is determined that the user of the access source is not the predetermined user or that although the user of the access source is the predetermined user, this user does not have the authorization, vehicle function enablement determiner 102 determines that the predetermined condition is not satisfied and thus does not permit the access. In contrast, when it is determined that the user of the access source is the predetermined user and has the authorization, vehicle function enablement determiner 102 determines that the predetermined condition is satisfied.

Furthermore, for example, the function of the access destination is classified into safety (also referred to simply as S), finance (also referred to simply as F), operability (also referred to simply as O), or privacy (also referred to simply as P) according to impact that occurs when this function is compromised. When the function of the access destination relates to safety (S) or operability (O), vehicle function enablement determiner 102 performs the verification of the security status of vehicle 10. More specifically, vehicle function enablement determiner 102 classifies the impact that occurs when the function of the access destination is compromised into safety, finance, operability, or privacy. Then, when the function of the access destination relates to safety (S) or operability (O), vehicle function enablement determiner 102 performs the verification of the security status of vehicle 10.

"When a function is compromised" refers to a case where the access destination receives a certain attack from the access source, for example. The relationship between the impact that occurs when a function is compromised and each of S, F, O, and P described above may be freely defined and is not intended to be particularly limiting. Information indicating this relationship is stored beforehand in the memory of central ECU 100, for example. Vehicle function enablement determiner 102 determines, based on this information, whether the function of the access destination includes safety (S) or operability (O), for example. When the function is determined to include S or O, vehicle function enablement determiner 102 performs the verification of the security status of vehicle 10.

For example, safety (S) represents a magnitude of impact on the life or injury of a driver or a passenger of vehicle 10. For example, finance (F) represents a magnitude of financial impact on a company. For example, operability (O) represents a magnitude of impact in terms of whether the function of vehicle 10 continues to be usable. For example, privacy (P) represents a level of leakage risk of personal information of the user of vehicle 10.

For example, the impact that occurs when the function of the access destination is compromised is classified beforehand into safety, finance, operability, or privacy. When an access request is received, vehicle function enablement determiner 102 determines, from among the above, the classification of the impact that occurs when the function of the access destination is compromised.

Note that when the function of the access destination is determined to include neither safety (S) nor operability (O), vehicle function enablement determiner 102 need not perform the verification of the security status of vehicle 10. In this case, vehicle function enablement determiner 102 determines whether to permit the access, based on only the first verification result out of the first verification result and the second verification result, for example. Note that when the function of the access destination is determined to include neither safety (S) nor operability (O), vehicle function enablement determiner 102 may determine that the security status of vehicle 10 satisfies the predetermined condition.

Furthermore, for example, when the function of the access destination relates to running of vehicle 10, vehicle function enablement determiner 102 performs the verification of the security status of vehicle 10. The function relating to running of vehicle 10 relates to at least one of S or O, for example. To be more specific, when the function of the access destination relates to running of vehicle 10, vehicle function enablement determiner 102 determines that the function of the access destination relates to safety (S) or operability (O) and thus performs the verification of the security status of vehicle 10, for example.

Furthermore, for example, vehicle function enablement determiner 102 determines a first verification level required for the security status of the access source and a second verification level required for the security status of vehicle 10, based on the classification (such as S, F, O, or P described above) of the impact that occurs when the function of the access destination is compromised. Then, when the first verification result satisfies the first verification level and the second verification result satisfies the second verification level, vehicle function enablement determiner 102 permits the access source to access this function. In contrast, for example, when the first verification result does not satisfy the first verification level or the second verification result does not satisfy the second verification level, vehicle function enablement determiner 102 does not permit the access source to access this function.

The relationship between the classification of the impact that occurs when the function of the access destination is compromised and the verification level may be freely defined, and is not intended to be particularly limiting. Furthermore, the impact that occurs when the function of the access destination is compromised may be classified according to a security element required against this compromise, for example. For example, the impact that occurs when the function of the access destination is compromised may be classified into authenticity (confidentiality) or integrity. Information indicating this relationship is stored beforehand in the memory of central ECU 100, for example. Vehicle function enablement determiner 102 determines, based on this information, whether the first verification result satisfies the first verification level and whether the second verification result satisfies the second verification level, for example.

Furthermore, for example, vehicle function enablement determiner 102 determines the first verification level required for the security status of the access source, based on the classification (such as S, F, O, or P described above) of the impact that occurs when the function of the access destination is compromised. Moreover, vehicle function enablement determiner 102 determines the second verification level required for the security status of vehicle 10, based on a user policy. Then, when the first verification result satisfies the first verification level and the second verification result satisfies the second verification level, vehicle function enablement determiner 102 permits the access source to access this function.

For example, the user policy is information indicating a standard that is freely set by the user and that is used by vehicle function enablement determiner 102 to determine whether to grant permission depending on the function of vehicle 10. Note that the user policy may be set freely by the user and is not intended to be particularly limiting. Information indicating the relationship between the user policy and the second verification level may be set freely by the user and is not intended to be particularly limiting. Information indicating this relationship is stored beforehand in the memory of central ECU 100, for example. For example, vehicle function enablement determiner 102 determines, based on this information, whether the second verification result satisfies the second verification level.

In this way, vehicle function enablement determiner 102 determines whether to permit the access in response to the access request.

Furthermore, for example, vehicle function enablement determiner 102 checks the latest version of the software installed on ECU 200a of vehicle 10. When the software is not the latest version, vehicle function enablement determiner 102 issues a warning to the user, for example.

The checking of the latest version of the software is performed through communication with management center 30 via center communicator 101, for example.

Furthermore, when the software is not the latest version, the warning to the user is issued through communication with user terminal 50 via user terminal communicator 103 or using an image and/or sound provided through control over the display of vehicle 10 and/or the audio device of vehicle 10, such as a loudspeaker. Here, for example, depending on the elapsed time since the last checking of the latest version of the software installed on ECU 200a of vehicle 10, vehicle function enablement determiner 102 changes at least one of: the content of the warning to the user; the method of checking this latest version; the frequency of checking this latest version; or the timing of checking this latest version.

The content of the warning to the user, the method of checking this latest version, the frequency of checking this latest version, and the timing of checking this latest version are freely predetermined, for example. For example, when the elapsed time is more than or equal to the predetermined period of time, vehicle function enablement determiner 102 changes at least one of: the content of the warning to the user; the method of checking this latest version; the frequency of checking this latest version; and the timing of checking this latest version. The method of checking this latest version refers to a communication path used for checking the latest version, for example. For example, when the elapsed time is more than or equal to the predetermined period of time, vehicle function enablement determiner 102 switches the communication path for checking the latest version from the communication between vehicle 10 and management center 30 to the communication among vehicle 10, user terminal 50, and management center 30.

User terminal communicator 103 is a communication interface for communicating with user terminal 50. Note that user terminal communicator 103 is an example of a user policy receiver.

Vehicle network communicator 104 is a communication interface for communicating with, for example, ECU 200a over the in-vehicle communication network.

User interface 105 is a processor for controlling a user interface, such as the display of vehicle 10. For example, vehicle function enablement determiner 102 causes user interface 105 to display, on this display, the image indicating the warning to the user.

Vehicle function enablement determiner 102 and user interface 105 are implemented by one or more processors and one or more memories that store software executed by the one or more processors. The one or more memories are implemented by a solid state device (SSD) or a hard disk drive (HDD), for example.

Function usage frequency holder 106 is a storage device that stores information relating to the usage frequency of the function of vehicle 10 (the function usage frequency information). For example, function usage frequency holder 106 stores information indicating a relationship between the usage frequency and the aforementioned threshold value.

Update checking history holder 107 is a storage device that stores a time at which the presence or absence of an update to the software is checked with management center 30.

Vehicle configuration information holder 108 is a storage device that holds information (vehicle configuration information described later) indicating a current version of the software of vehicle 10.

Function usage frequency holder 106, update checking history holder 107, and vehicle configuration information holder 108 are implemented by one or more memories. The one or more memories are implemented by an SSD or an HDD, for example.

FIG. 4 is a block diagram of a functional configuration of ECU 200a according to Embodiment. Note that although the function that ECU 200b causes vehicle 10 to execute is different from the function that ECU 200a causes vehicle 10 to execute, the configuration of ECU 200b is substantially the same as that of ECU 200a and thus description thereof is omitted.

ECU 200a includes app unit 201a, communicator 202a, and version holder 203a.

App unit 201a is a processor that executes an application (software) different for each of functions of ECU 200a.

App unit 201a is implemented by one or more processors and one or more memories that store software executed by the one or more processors, for example. The one or more memories are implemented by an SSD or an HDD, for example.

Communicator 202a is a communication interface for communicating with, for example, central ECU 100 over the in-vehicle communication network.

Version holder 203a is a storage device that stores a version of the software of ECU 200a.

Version holder 203a is implemented by one or more memories, for example. The one or more memories are implemented by an SSD or an HDD, for example.

FIG. 5 is a block diagram of a functional configuration of management center 30 according to Embodiment.

Management center 30 includes communicator 301, update determiner 302, license information holder 303, center private key holder 304, software holder 305, and software list holder 306.

Communicator 301 is a communication interface for communicating with vehicle 10 and user terminal 50.

Update determiner 302 is a processor that determines whether vehicle 10 includes software to which an update is present. For example, based on the vehicle configuration information indicating the version of the software that is currently being used by, for example, ECU 200a of vehicle 10, update determiner 302 determines whether vehicle 10 includes the software to which an update is present. For example, update determiner 302 obtains, from vehicle 10, the vehicle configuration information by communicating with vehicle 10 via communicator 301.

Update determiner 302 is implemented by one or more processors and one or more memories that store software executed by the one or more processors, for example. The one or more memories are implemented by an SSD or an HDD, for example.

License information holder 303 is a storage device that stores license information indicating whether the user has the authorization (also referred to as entitlement or license) to use the function of vehicle 10. The license information indicates whether the user is a paid user, for example. The license information includes information indicating, among a plurality of functions of vehicle 10, the function of vehicle 10 that the user has the authorization to use.

Center private key holder 304 is a storage device that stores a private key (for example, the private key to a digital certificate of management center 30) that is held by neither vehicle 10 nor user terminal 50 and held only by management center 30. For example, update determiner 302 signs information relating to the update determination of the software (the information includes information relating to the checking date and the latest version) using a center private key for example. After this, update determiner 302 verifies a public key of vehicle 10 to check whether this information can be used without problems, for example. In this way, no device other than management center 30 is allowed to sign the information relating to the update determination of the software, for example.

Software holder 305 is a storage device that holds firmware and application software of vehicle 10. Each of the firmware and the application software is an example of the software used by ECU 200a. The firmware and the application software of vehicle 10 are downloaded to vehicle 10 to update the firmware and the application software of vehicle 10.

Note that management center 30 need not include software holder 305. For example, the firmware and the application software may be delivered by a content delivery network (CDN).

Software list holder 306 is a storage device that holds a list of software (file names, for example) that is stored in software holder 305.

License information holder 303, center private key holder 304, software holder 305, and software list holder 306 are implemented by one or more memories. The one or more memories are implemented by an SSD or an HDD, for example.

FIG. 6 is a block diagram of a functional configuration of user terminal 50 according to Embodiment.

User terminal 50 includes communicator 401, vehicle communication app unit 402, server communication app unit 403, user policy holder 404, user driving tendency holder 405, and license certificate holder 406.

Communicator 401 is a communication interface for performing near field communication or long-range wireless communication with vehicle 10 and management center 30.

Vehicle communication app unit 402 is a processor that performs communication with vehicle 10 using an application for communicating with vehicle 10.

Server communication app unit 403 is a processor that performs communication with management center 30 using an application for communicating with management center 30.

Vehicle communication app unit 402 and server communication app unit 403 are implemented by one or more processors and one or more memories that store software executed by the one or more processors, for example. The one or more memories are implemented by an SSD or an HDD, for example.

User policy holder 404 is a storage device that holds the user policy indicating a condition of the status of vehicle 10 for using the function of vehicle 10. As described above, the user policy is the information set freely by the user.

User driving tendency holder 405 is a storage device that holds user driving tendency information indicating a frequency of use by the user for each of the functions of vehicle 10.

License certificate holder 406 is a storage device that holds a license certificate. The license certificate is information provided for a function that requires a license. For example, at the time of payment, the user downloads the license certificate from management center 30 and then causes license certificate holder 406 to hold the license certificate. For example, when the user uses the function of vehicle 10, user terminal 50, operated by the user, accesses this function by using the license certificate corresponding to this function.

User policy holder 404, user driving tendency holder 405, and license certificate holder 406 are implemented by one or more memories. The one or more memories are implemented by an SSD or an HDD, for example.

### [Specific Examples of Various Kinds of Information]

The various kinds of information used by connected car system 1 according to Embodiment are next described.

FIG. 7 is a diagram illustrating an example of the function usage frequency information according to Embodiment. To be more specific, FIG. 7 illustrates the information stored in function usage frequency holder 106.

The function usage frequency information indicates, for each of the functions, the number of times the user uses this function (accesses this function, for example) per month, for example.

FIG. 7 shows, as an example of the functions of vehicle 10, automated driving, entertainment, Internet connection, and V2X communication. Moreover, each of the functions is associated with information on the number of times this function is used per month.

Note that the classification of the functions is not limited to the example illustrated in FIG. 7 and may be freely made.

Furthermore, the function usage frequency information need not be the information indicating the number of uses. For example, the function usage frequency information may be information indicating a usage time or information indicating a usage rate per one drive.

FIG. 8 is a diagram illustrating an example of update checking history information according to Embodiment. To be more specific, FIG. 8 illustrates information stored in update checking history holder 107.

The update checking history information includes a list indicating the version of the software being used by, for example, ECU 200a at the time when vehicle function enablement determiner 102 last performs the checking (makes an inquiry to management center 30 about the latest version of the software, for example). Immediately after vehicle 10 makes the inquiry to management center 30, this list indicates the latest version of the software (or more specifically, this list is the latest list). For example, the update checking history information includes a list of the latest versions of the software used by the ECUs of vehicle 10 as of the day when vehicle function enablement determiner 102 last checks the version of the software by communicating with management center 30. The update checking history information illustrated as an example in FIG. 8 includes the file name and the last checking date of this list.

The update checking history information is signed by management center 30 together with the time (also referred to as the update checking date or the checking time of day) when vehicle function enablement determiner 102 last performs the checking, for example. Thus, vehicle 10 is not allowed to tamper with this information. More specifically, because the latest list includes an issuance time, the signed latest list cannot be tampered with. To be more specific, the issuance time (the checking time of day) included in this list cannot be tampered with. For example, vehicle 10 uses a public key of management center 30 to verify that the latest list is validly issued by management center 30 at this checking time of day. Even when the contents of the list indicated by the update checking history information have not changed, vehicle 10 updates the last checking date based on the latest time of day at which vehicle 10 verifies with management center 30. Information on not only the contents of the list but also the time when the checking is performed is important. Even when the checking does not result in the update of this list, vehicle 10 always updates the last checking date to the latest date on which the checking is performed.

The last checking date (or more specifically, the latest list including the information indicating the last checking date) is signed using the center private key to protect against tampering by vehicle 10, for example.

FIG. 9 is a diagram illustrating an example of the vehicle configuration information according to Embodiment. To be more specific, FIG. 9 illustrates the information stored in vehicle configuration information holder 108.

The vehicle configuration information indicates: the current version of the software used by the ECU, such as ECU 200a or ECU 200b, that is included in vehicle 10; and the last update date of this software.

The vehicle configuration information illustrated as an example in FIG. 9 indicates that the ECU with identifier "A" is currently using version 3.0 of the software and that the date of update to this version is June 1, 2022. Furthermore, for example, the vehicle configuration information indicates that the ECU with identifier "B" is currently using version 1.0 of the software and that the date of update to this version is October 1, 2021.

A notice of the current version of the software currently being used by the corresponding ECU is transmitted from this ECU to central ECU 100 via the in-vehicle communication network when this software is updated, for example. Alternatively, the notice of the current version of the software currently being used by the corresponding ECU is periodically transmitted from this ECU to central ECU 100 via the in-vehicle communication network.

Note that although FIG. 9 illustrates the example where one ECU corresponds to one version, this is not intended to be limiting. For example, when the ECU are using a plurality of pieces of software, the vehicle configuration information may include information indicating a version for each of the plurality of pieces of software.

Furthermore, the vehicle configuration information may be protected against tampering. For example, the vehicle configuration information may be protected using a message authentication code generated using a private key.

FIG. 10 is a diagram illustrating an example of version information of the software according to Embodiment. For example, FIG. 10 is a diagram illustrating a specific example of information that is stored in version holder 203a and that indicates the version of the software being used by the corresponding ECU included in vehicle 10.

Each of the ECUs included in vehicle 10 stores the version information indicating the current version of the software that is being used by the ECU. The example illustrated in FIG. 10 indicates that the ECU with identifier "A" is currently using version 3.0 of the software.

Note that although FIG. 10 illustrates the example where one ECU corresponds to one version, this is not intended to be limiting. For example, when the ECU are using a plurality of pieces of software, the version information may include information indicating a version for each of the plurality of pieces of software. Furthermore, for example, the version information may include information indicating a version for each of the plurality of pieces of software and a version of a library making up this software.

FIG. 11 is a diagram illustrating an example of the license information according to Embodiment. To be more specific, FIG. 11 is a diagram illustrating a specific example of the information that is stored in license information holder 303 and that indicates the authorization the user has.

The license information indicates each of the users having a corresponding authorization. To be more specific, the license information includes: identification information that uniquely identifies the user; information indicating details of the authorization that this user has; and information indicating the expiration date of this authorization.

The license information illustrated as an example in FIG. 11 indicates that the user with identifier "X" has the authorization to use the function of vehicle 10 that is included in "Automated driving package" and that the expiration date of the authorization is June 1, 2024. Furthermore, for example, the license information indicates that the user with identifier "Y" has the authorization to use the function of vehicle 10 that is included in "Automated driving package" and that the expiration date of the authorization is May 1, 2022. Furthermore, for example, the license information indicates that the user with identifier "Z" does not have the authorization to use the function of vehicle 10.

Note that the license information may be provided; for each of the users; for each of vehicles 10 (for example, for each of a plurality of vehicles included in connected car system 1); or for each of the users and for each of vehicles 10.

Furthermore, the license information need not indicate the information relating to the user that does not have the authorization. For example, the license information illustrated as the example in FIG. 11 need not include the information relating to the user with identifier "Z".

FIG. 12 is a diagram illustrating an example of the center private key according to Embodiment. To be more specific, FIG. 12 is a diagram illustrating a specific example of the center private key stored in center private key holder 304.

The center private key is a private key that is stored in vehicle 10 and that corresponds to the public key (not shown) released by management center 30. The center private key is used to protect, for example, the information including the latest list issued by management center 30 against tampering. Vehicle 10 uses the public key to verify the issuance by management center 30. This allows the confidentiality of the information issued by management center 30 to be protected from being viewed by any device other than management center 30.

FIG. 13 is a diagram illustrating an example of the software according to Embodiment. To be more specific, FIG. 13 illustrates information stored in software holder 305.

Software holder 305 stores the software used by the ECUs included in vehicle 10. For example, software holder 305 stores version list information in which identification information uniquely identifying the ECU, information indicating the latest version of the software being used by this ECU, and the name of this software are associated with each other. More specifically, software holder 305 stores: the information indicating the latest version; and the name of the software in this latest version. To be more specific, the version list information indicates the information on the latest version and the name of the software, for each of the ECUs included in vehicle 10. Furthermore, the version list information also includes a software file, for example.

The version list information illustrated as the example in FIG. 13 includes a software file in version 3.0 that is the latest version of the software named "Av30. bin" being used by the ECU with identifier "A". Furthermore, for example, the version list information includes a software file in version 1.0 that is the latest version of the software named "Bv10. bin" being used by the ECU with identifier "B".

FIG. 14 is a diagram illustrating an example of latest version list information of the software according to Embodiment. To be more specific, FIG. 14 illustrates information stored in software list holder 306.

The latest version list information is a current list (latest list) indicating the latest version of the software. Based on the version list information and the latest version list information, the determination whether the version of the software being used by the ECU of vehicle 10 is the latest version can be made.

Note that the latest version list information may indicate the latest version of the software for each of vehicles 10 (for example, for each of types of vehicles 10).

FIG. 15 is a diagram illustrating an example of the user policy according to Embodiment. To be more specific, FIG. 15 is a diagram illustrating an example of information stored in user policy holder 404.

The user policy is information indicating the condition for determining, when the user uses a function of vehicle 10, whether to allow vehicle 10 to execute the function of vehicle 10. More specifically, the user policy indicates, for each of the functions of vehicle 10, the condition for the status of vehicle 10 when the user uses the function of vehicle 10. For example, the user policy includes the function of vehicle 10 and the condition for determining whether to allow vehicle 10 to execute this function (that is, the condition for determining whether to enable or disable the function).

The user policy illustrated as the example in FIG. 15 indicates that when 180 days or more have been passed since the last checking of the update of the software for executing "Basic function" that is an example of the function of vehicle 10, this function is disabled. In this case, for example, when an access request to access "Basic function" is received from the user who has set this user policy, vehicle function enablement determiner 102 obtains the user policy via user terminal communicator 103. Then, vehicle function enablement determiner 102 bases the second verification level on whether 180 days or more have passed since the last checking of the update of the software for executing this basic function. By determining whether 180 days or more have passed since the last checking of the update of the software, vehicle function enablement determiner 102 performs the verification of the security status of vehicle 10. For example, when 180 days or more have not passed, vehicle function enablement determiner 102 determines that the second verification result satisfies the second verification level. Thus, vehicle function enablement determiner 102 permits the access source to access this function and causes the ECU corresponding to this function to execute this function. In contrast, for example, when 180 days or more have passed, vehicle function enablement determiner 102 determines that the second verification result does not satisfy the second verification level. Thus, vehicle function enablement determiner 102 does not permit the access source to access this function and does not cause the ECU corresponding to this function to execute this function.

FIG. 16 is a diagram illustrating an example of the user driving tendency information according to Embodiment. To be more specific, FIG. 16 is a diagram illustrating an example of the information stored in user driving tendency holder 405.

The user driving tendency information indicates, for each of the functions of vehicle 10, the usage frequency with which the user uses the function.

The user driving tendency information illustrated as the example in FIG. 16 indicates that "Basic function" that is an example of the function of vehicle 10 is used by the user with a "High" usage frequency with which the user tends to frequently use this function. Furthermore, for example, the user driving tendency information indicates that "Automated driving function" that is an example of the function of vehicle 10 is used by the user with a "Medium" usage frequency with which the user tends to sometimes use this function. Furthermore, for example, the user driving tendency information indicates that "Internet connection" that is an example of the function of vehicle 10 is used by the user with a "Low" usage frequency with which the user tends to rarely use this function.

For example, the user driving tendency information is transmitted to vehicle 10 in which the user driving tendency information is stored as the function usage frequency information and used in the verification performed by vehicle function enablement determiner 102.

FIG. 17 is a diagram illustrating an example of the license certificate according to Embodiment. To be more specific, FIG. 17 is a diagram illustrating an example of the information stored in license certificate holder 406.

The license certificate is a certificate that is held by user terminal 50 and that indicates the authorization the user has for using the function of vehicle 10.

The license certificate illustrated as the example in FIG. 17 indicates that the user is allowed to use the function relating to the automated driving package that is an example of the function of vehicle 10. For example, "USERCERT" includes: the signature indicating the issuance by management center 30; and information relating to the authorization the user has.

### [Procedures]

Next, procedures executed by connected car system 1 according to Embodiment are described. Note that the following describes an example where the access destinations are ECU 200a and ECU 200b among the plurality of ECUs included in vehicle 10.

FIG. 18 is a sequence diagram illustrating a procedure for access permission processing according to Embodiment. To be more specific, FIG. 18 is a diagram of a sequence performed in response to an access request from user terminal 50 to use an advanced driving function that is an example of the function of vehicle 10. Here, both ECU 200a and ECU 200b relate to the execution of this function.

In response to an operation received from the user for example, user terminal 50 first makes an access request to central ECU 100 for access to the advanced driving function (S100).

When obtaining the access request, central ECU 100 determines whether the function (the advanced driving function in the present example) corresponding to the access request relates to safety (S) (S101).

Furthermore, in response to an operation from the user for example, user terminal 50 transmits the user policy to central ECU 100 (S102).

Central ECU 100 checks the vehicle configuration information stored in vehicle configuration information holder 108 (S103). Here, based on the user policy and the vehicle configuration information, central ECU 100 performs the verification of the security status of vehicle 10, for example.

Furthermore, in response to an operation from the user for example, user terminal 50 transmits user authentication information to central ECU 100 (S104).

The user authentication information includes the identification information for identifying the user and the license certificate, for example.

Based on the user authentication information, central ECU 100 performs the verification of the security status of the access source (S105).

Here, for example, central ECU 100 determines to permit the execution of the function corresponding to the access request, based on the verification results in Step S103 and Step S105 (S106). In this case, central ECU 100 instructs ECU 200a and ECU 200b to execute this function.

As a result, ECU 200a and ECU 200b enable (that is, execute) the function corresponding to the access request (S107 and S108).

In this way, central ECU 100 performs the verifications of the security status of vehicle 10 and the security status of the access source and then permits the access to the function of vehicle 10. Moreover, in response to notification from central ECU 100, ECU 200a and ECU 200b enable (that is, execute) the advanced driving function.

Note that the order in which the verification of the security status of vehicle 10 and the verification of the security status of the access source are performed is not intended to be particularly limiting.

FIG. 19 is a flowchart of a procedure for processing performed by central ECU 100 according to Embodiment. To be more specific, FIG. 19 is a flowchart of a procedure for processing executed by central ECU 100 (or more specifically, by vehicle function enablement determiner 102).

Central ECU 100 first obtains an access request from user terminal 50, for example (S200).

Central ECU 100 next determines whether the function the use of which is requested in the access request relates to safety (S) or operability (O) (S201).

When the function the use of which is requested in the access request is determined to relate to safety (S) or operability (O) (Yes in S201), central ECU 100 performs the verification of the security status of vehicle 10 (S202).

Central ECU 100 next performs the verification of the security status of the access source (S203). Note that when the function the use of which is requested in the access request is determined to relate to neither safety (S) nor operability (O) (No in S201), central ECU 100 executes Step S203 without executing Step S202.

Central ECU 100 next determines whether to permit the access, based on the results of the executions, or more specifically, the verification results, of Step S202 and Step S203 (S204). Note that when Step S202 is not executed, central ECU 100 determines whether to permit the access, based on the verification result of Step S203.

When central ECU 100 determines to permit the access (Yes in S204), central ECU 100 causes ECU 200a and ECU 200b to enable the function corresponding to the access request (S205).

In contrast, when central ECU 100 determines not to permit the access (No in S204), central ECU 100 causes ECU 200a and ECU 200b to disable the function corresponding to the access request (S206). To be more specific, when central ECU 100 determines not to permit the access, central ECU 100 does not allow ECU 200a and ECU 200b to perform the function corresponding to the access request.

In this way, whether or not the security status of vehicle 10 is to be verified may be changed depending on the type of the function of the access destination, as in the determination made in Step S201 for example.

FIG. 20 is a flowchart illustrating, in more detail, processing performed by central ECU 100 to verity the security status of vehicle 10. To be more specific, FIG. 20 is a flowchart illustrating Step S202 in more detail.

Central ECU 100 first obtains the vehicle configuration information stored in vehicle configuration information holder 108 (S300). Central ECU 100 may obtain the vehicle configuration information by obtaining, from ECU 200a and ECU 200b, information indicating the respective versions of the software being used by ECU 200a and ECU 200b.

Central ECU 100 next obtains the update checking history information stored in update checking history holder 107 (S301).

Based on the vehicle configuration information and the update checking history information, central ECU 100 next verifies whether the versions of the software being used by the ECUs (ECU 200a and ECU 200b in the present example) are latest (S302).

Central ECU 100 next obtains the date of the checking of the latest list (the last checking date) included in the update checking history information and indicating the information on the latest versions of the software (S303).

Central ECU 100 next outputs the verification results of the versions of the software and the checking date of the latest list (S304). Note that this outputting refers to temporarily storing these pieces of information into, for example, a memory for later reference to allow these pieces of information to be used in Step S203 and subsequent processes.

In this way, to verify the security status of vehicle 10, the vehicle configuration information (the version of the software) of vehicle 10 is mainly checked. Furthermore, the version of the software indicated in the latest list held by vehicle 10 is checked against the version of the software currently being used by, for example, ECU 200a. This checks whether the version of the software currently being used by, for example, ECU 200a is the latest version. Furthermore, the obtainment date of the latest list is also checked. These checking results are used in the subsequent processes.

FIG. 21 is a flowchart illustrating, in more detail, processing performed by central ECU 100 to determine the access permission according to Embodiment. To be more specific, FIG. 21 is a flowchart illustrating Step S204 in more detail.

Central ECU 100 first determines whether the function the use of which is requested in the access request relates to safety (S) or operability (O) (S400).

When the function the use of which is requested in the access request is determined to relate to safety (S) or operability (O) (Yes in S400), central ECU 100 determines whether all the versions of the software being used by the ECUs relating to this function are latest (S401). In the present example, central ECU 100 makes this determination, based on the result of the verification in Step S302, for example.

When all the versions of the software being used by the ECUs relating to this function are determined to be latest (Yes in S401), central ECU 100 determines whether the checking date of the latest list indicating the latest version of the software being used by, for example, ECU 200a is within the predetermined period of time (S402).

More specifically, based on the update checking history information, central ECU 100 determines whether the elapsed time since the last checking with management center 30 about the latest version of the software installed on, for example, ECU 200a is more than or equal to the predetermined period of time.

When the checking date of the latest list is determined to be within the predetermined period of time (Yes in S402), central ECU 100 determines that the security status of vehicle 10 presents no problem. Then, central ECU 100 next determines whether the security status of the access source presents a problem, by performing the verification of the security status of the access source (S406). In the present example, central ECU 100 performs the authentication of the access source and the authorization for the access source, for example. More specifically, in Step S406, central ECU 100 determines whether the authentication of the access source and the authorization for the access source are successful.

Note that, for example, when the function the use of which is requested in the access request is determined to relate to neither safety (S) nor operability (O) (No in S400), central ECU 100 proceeds to Step S406 without executing Steps S401 to S404.

When the security status of the access source is determined to present no problem (Yes in S406), central ECU 100 determines to permit the access and thus causes ECU 200a and ECU 200b to enable the function corresponding to the access request (S409).

In contrast, when the security status of the access source is determined to present a problem (No in S406), or more specifically, when the user of the access source is not the predetermined user or when this user has no authorization to use this function, central ECU 100 redetermines whether the function the use of which is requested in the access request relates to safety (S) or operability (O) (S407). In the present example, the determination result of Step S400 may be used.

When the function the use of which is requested in the access request is determined to relate to safety (S) or operability (O) (Yes in S407), central ECU 100 determines whether an elapsed time since the last authorization for the access source is within a predetermined period of time (S408). More specifically, when the access request from this access source has been authorized (and authenticated) in the past, central ECU 100 determines whether the elapsed time since this authorization is within the predetermined period of time.

When the elapsed time since the last authorization for the access source is determined to be within the predetermined period of time (Yes in S408), central ECU 100 proceeds to Step S409.

Note that this predetermined period of time may be freely set and is not intended to be particularly limiting.

In contrast, when the function the use of which is requested in the access request is determined to relate to neither safety (S) nor operability (O) (No in S407) or when the elapsed time since the last authorization for the access source is determined not to be within the predetermined period of time (No in S408), central ECU 100 determines that the security status of the access source presents a problem, thus determines not to permit the access, and then causes ECU 200a and ECU 200b to disable the function corresponding to the access request (S410).

Furthermore, when at least one of the versions of the software being used by the ECUs relating to the function the use of which is requested in the access request is determined not to be latest (No in S401), central ECU 100 determines whether the function the use of which is requested in the access request relates to safety (S) (S403).

When the function the use of which is requested in the access request is determined not to relate to safety (S) (No in Step S403), central ECU 100 determines whether the versions of the software being used by the ECUs relating to the function the use of which is requested in the access request satisfy the user policy (S404).

When the versions of the software being used by the ECUs relating to the function the use of which is requested in the access request are determined to satisfy the user policy (Yes in S404), central ECU 100 proceeds to Step S402. More specifically, even when it is determined to be "No" in Step S401, central ECU 100 determines that the security status of vehicle 10 presents no problem, depending on a different condition.

In contrast, when it is determined that: the checking date of the latest list is not within the predetermined period of time (No in Step S402); the function the use of which is requested in the access request relates to safety (S) (Yes in Step S403); or the versions of the software being used by the ECUs relating to the function the use of which is requested in the access request do not satisfy the user policy (No in Step S404), central ECU 100 determines that the security status of vehicle 10 presents a problem, thus determines not to permit the access, and then causes ECU 200a and ECU 200b to disable the function corresponding to the access request (S405). Furthermore, in Step S405, central ECU 100 controls user terminal 50 or the display of vehicle 10 to notify the user that the versions of software being used by ECU 200a and ECU 200b are not latest, for example. This urges the user to check the latest list and/or update the versions of the software.

In this way, the condition required for the security status of vehicle 10 may be changed depending on the function of the access destination. Similarly, the condition required for the security status of the access source may be changed.

FIG. 22 is a flowchart of processing to determine an expiration period (or more specifically, the aforementioned predetermined period of time) for the checking date of the latest list, according to Embodiment.

Assume first that the expiration period for the checking date of the latest list is set beforehand at one year (S500). Information indicating this expiration period is stored in the memory of central ECU 100, for example.

Central ECU 100 determines whether the function the use of which is requested in the access request relates to safety (S) (S501).

When the function the use of which is requested in the access request is determined to relate to safety (S) (Yes in S501), central ECU 100 reduces the expiration period by half (S502). For example, when the expiration period is one year, this expiration period is reduced to six months. In contrast, when the function the use of which is requested in the access request is determined not to relate to safety (S) (No in S501), central ECU 100 does not change the expiration period.

When it is determined to be "No" in Step S501 or after Step S502, central ECU 100 determines whether the function the use of which is requested in the access request is a function for performing vehicle external communication (S503).

When the function the use of which is requested in the access request is determined to be the function for performing the vehicle external communication (Yes in S503), central ECU 100 reduces the expiration period by half (S504). For example, when the expiration period is six months at the time of Step S502, this expiration period is reduced to three months. Furthermore, for example, when it is determined to be "No" in Step S501, the expiration period is reduced to six months. In contrast, when the function the use of which is requested in the access request is determined not to be the function for performing the vehicle external communication (No in Step S503), central ECU 100 does not change the expiration period.

Furthermore, when it is determined to be "No" in Step S503 or after Step S504, central ECU 100 determines whether the usage frequency of the function the use of which is requested in the access request is high (S505). For example, based on the function usage frequency information, central ECU 100 determines whether the usage frequency of this function is higher than or equal to a predetermined frequency. The predetermined frequency may be freely set and is not intended to be particularly limiting.

When the usage frequency of the function the use of which is requested in the access request is determined to be high (Yes in S505), central ECU 100 reduces the expiration period by half (S506). In contrast, when the usage frequency of the function the use of which is requested in the access request is determined to be low (No in S505), central ECU 100 does not change the expiration period.

Note that the expiration period that is set beforehand and the number of days to which the expiration period is changed in Steps S502, S504, and S506 may be freely set. Furthermore, the order in which Steps S501, S503, and S505 are executed may be freely set.

Furthermore, a threshold (such as the aforementioned predetermined frequency) used in Step S505 for determining whether the usage frequency is high may be freely set and is not intended to be particularly limiting.

In this way, the expiration period of the checking date of the latest list may be changed depending on, for example, the details or usage frequency of the function of vehicle 10. For the function relating to the safety for instance, a shorter expiration period and more frequent checking of the version of the software are required. Furthermore, for the function relating to the vehicle external communication for instance, more frequent checking of the latest list is required because this function can be an entry point of an attack. Furthermore, for the function having a high usage frequency for instance, more frequent checking of the latest list of the version of the software used by the ECU relating to this function is required.

### [Other Examples]

Next, the following describes different examples other than the above-described examples applied to connected car system 1 according to Embodiment, and also specific examples of an image used for notification to the user.

FIG. 23 is a diagram illustrating an example of a relationship between function of vehicle 10 and impact that occurs when the function is compromised, according to Embodiment. To be more specific, FIG. 23 is a diagram illustrating an example of a table showing, for each of the functions of vehicle 10, a relationship among: the impact that occurs when the function is compromised; a subject (access source) capable of accessing this function; the presence or absence of the verification of the security status of the access source; and whether the checking of the security status of vehicle 10 is required.

The impact that occurs when the function is compromised indicates whether the impact is made on safety (S), finance (F), operability (O), or privacy (P) when the function is compromised by an attack for instance.

The processing performed using the user driving tendency information illustrated in FIG. 16 may be performed using the table illustrated in FIG. 23 instead of the user driving tendency information. This table may be stored in the memory of central ECU 100, for example.

FIG. 24 is a diagram illustrating an example of warning display based on the update checking date of the version of the software of vehicle 10, according to Embodiment. To be more specific, FIG. 24 is a diagram illustrating an example of an image displayed on the display of vehicle 10 by user interface 105 when the elapsed time since the last checking of the latest list is more than or equal to the predetermined period of time.

For example, the image in FIG. 24 displayed on the display of vehicle 10 notifies the user that the latest list has not been checked for a while. Vehicle 10 usually accesses management center 30 directly according to a communication standard, such as the 3G or 4G communication standard. Thus, for example, the notice provided as above urges the user to change the communication method to a method that enables vehicle 10 to communicate with management center 30 via user terminal 50.

When vehicle 10 communicates with management center 30 via user terminal 50, user terminal 50 accesses management center 30 based on vehicle type information indicating the type of vehicle 10. User terminal 50 receives the latest list from management center 30, and then transmits the received latest list to vehicle 10. For example, vehicle 10 updates the update checking history information using the latest list received from user terminal 50.

The latest list and the checking time of day (the update checking date) are signed with the private key of management center 30. This allows vehicle 10 to check the validity of the latest list and the checking time of day.

Furthermore, vehicle 10 may communicate with management center 30 via, instead of user terminal 50, another vehicle and/or a roadside unit for instance.

FIG. 25 is a diagram illustrating an example of warning display based on the update checking date of the version of the software of vehicle 10, according to Embodiment. To be more specific, FIG. 25 is a diagram illustrating an example of an image that user interface 105 causes vehicle 10 to display when the security status of vehicle 10 presents a problem.

For example, the user checks this image. Then, when the version of the software currently being used by ECU 200a that is the access destination is not latest, the user selects whether to cause the function desired by the user to be executed and inputs the result of this selection using a user interface included in vehicle 10, such as a touch panel that is not shown. Based on the result of this input, central ECU 100 switches between enabling and disabling the function corresponding to the access request, for example.

As described above, when the version of the software currently being used by ECU 200a that is the access destination is not latest for example, the use of the function corresponding to the access request is not immediately stopped. Instead, the access to this function is disabled after a certain amount of time. Meanwhile, for the user who is concerned about the aforementioned processing that does not lead to the immediate stop of the use of the function as above, it is also possible to disable this function by processing performed in response to such corresponding input.

FIG. 26 is a diagram illustrating an example of a function disablement notice based on the update checking date of the version of the software of vehicle 10, according to Embodiment. To be more specific, FIG. 26 is a diagram illustrating an example of an image that user interface 105 causes the display of vehicle 10 to display when, although no problem is found as a result of the verifications of the latest list (the update checking history information) and the vehicle configuration information stored in vehicle 10, the elapsed time since the last checking of the latest list stored in vehicle 10 is more than or equal to the predetermined period of time.

For example, the user checks this image. Then, when the elapsed time since the last checking of the latest list stored in vehicle 10 is more than or equal to the predetermined period of time, the user selects whether to cause vehicle 10 to check with management center 30 about the latest list and inputs the result of this selection using a user interface included in vehicle 10, such as a touch panel that is not shown. Based on the result of this input, central ECU 100 checks with management center 30 about the latest list, for example.

In this way, central ECU 100 uses the image to urge the user to check the version of the software of vehicle 10, for example. With this, the input from the user may allow vehicle 10 to check with management center 30 about the latest list and thus may allow enablement of the function.

FIG. 27 is a diagram illustrating an example of verification levels of the security status of vehicle 10 and the security status of the access source, according to Embodiment. To be more specific, FIG. 27 is a diagram illustrating definitions relating to the verification levels of the security status of vehicle 10 (that is, the security status of the access destination) and the security status of the access source.

The example in FIG. 27 shows that the verification is classified under three levels LV1, LV2, and LV3.

LV1 of the verification of the security status of vehicle 10 is met when the version of the software being used by at least one of one or more ECUs relating to the function the use of which is requested in the access request is latest. For example, at verification level LV1, central ECU 100 determines that: the security status of vehicle 10 satisfies the verification level when the version of the software being used by the at least one of the one or more ECUs relating to the function the use of which is requested in the access request is latest; and the security status of vehicle 10 does not satisfy the verification level when the versions of the software being used by all of the one or more ECUs are not latest.

LV2 of the verification of the security status of vehicle 10 is met when the versions of the software being used by all of the one or more ECUs relating to the function the use of which is requested in the access request are latest. For example, at verification level LV2, central ECU 100 determines that: the security status of vehicle 10 satisfies the verification level when the versions of the software being used by all of the one or more ECUs relating to the function the use of which is requested in the access request are latest; and the security status of vehicle 10 does not satisfy the verification level when the version of the software being used by at least one of the one or more ECUs is not latest.

LV3 of the verification of the security status of vehicle 10 is met when the condition for LV2 is satisfied and the elapsed time since the last checking of the latest list is less than the predetermined period of time. For example, at verification level LV3, central ECU 100 determines that: the security status of vehicle 10 satisfies the verification level when the condition for LV2 is satisfied and the elapsed time since the last checking of the latest list is less than the predetermined period of time; and the security status of vehicle 10 does not satisfy the verification level when the condition for LV2 is not satisfied or when the elapsed time since the last checking of the latest list is more than or equal to the predetermined period of time.

LV1 of the verification of the security status of the access source is met when a period of time that has elapsed since the successful authentication of the access source is one day or less. To be more specific, LV1 is met when an elapsed time after the user of the access source is determined (verified) to be the predetermined user is one day or less. For example, at verification level LV1, central ECU 100 determines that: the security status of the access source satisfies the verification level when the period of time that has elapsed since the successful authentication of the access source is one day or less; and the security status of the access source does not satisfy the verification level when the period of time that has elapsed since the successful authentication of the access source is more than one day or when the authentication of the access source has not been successful.

LV2 of the verification of the security status of the access source is met when the authentication of the access source is performed successfully in response to the access request. To be more specific, LV2 is met when the user of the access source is the predetermined user. For example, at verification level LV2, central ECU 100 determines that: the security status of the access source satisfies the verification level when the user of the access source is the predetermined user; and the security status of the access source does not satisfy the verification level when the user of the access source is not the predetermined user.

LV3 of the verification of the security status of the access source is met when LV2 is met and also the authorization for the access source is provided successfully. To be more specific, LV3 is met when LV2 is met and also the user of the access source has the authorization to use the function the use of which is requested in the access request. For example, at verification level LV3, central ECU 100 determines that: the security status of the access source satisfies the verification level when LV2 is met and also the user of the access source has the authorization to use this function; and the security status of the access source does not satisfy the verification level when LV2 is not met or the user of the access source does not have the authorization to use this function.

Note that a required verification level may be set for each of the functions of vehicle 10.

The table illustrated in FIG. 27 may be stored in the memory of central ECU 100, for example.

FIG. 28 is a diagram illustrating an example of the required verification level for each of the functions of the access destination, according to Embodiment. To be more specific, FIG. 28 is a table showing, for each of the functions of vehicle 10, a relationship between the verification level of the security status of vehicle 10 and the verification level of the security status of the access source.

The verification level may be set according to the impact that occurs when the function of the access destination is compromised, for example. For example, as illustrated in FIG. 23, the function of vehicle 10 is associated with safety (S), finance (F), operability (O), or privacy (P) as a result of the classification according to the details of the impact that occurs when the function of the access destination is compromised. Furthermore, for example, safety (S), finance (F), operability (O), and privacy (P) are associated with the verification levels as illustrated in FIG. 28. With this, based on the type of the function of vehicle 10 the use of which is requested in the access request, central ECU 100 determines whether the impact that occurs when this function is compromised relates to safety (S), finance (F), operability (O), or privacy (P). Then, based on the determined classification, central ECU 100 determines the verification level.

Note that "Not required" as to the verification level in FIG. 28 means that no verification is performed. For example, when the classification of the function of vehicle 10 is finance (F), central ECU 100 does not perform the verification of the security status of vehicle 10 and determines, based on only the verification result of the security status of the access source, whether to permit the access.

Note that, for example, the function of "Vehicle data obtainment" in FIG. 23 is associated with finance (F), operability (O), and privacy (P). For the function of vehicle 10 that is associated with a plurality of classifications as described above, any of the verification levels corresponding to the respective classifications may be adopted. For example, for the function of vehicle 10 that is associated with a plurality of classifications, the most stringent verification level (or more specifically, the highest level among the set verification levels) may be adopted. For example, for the function of "Vehicle data obtainment" in FIG. 23, the level corresponding to LV2 or higher that is associated with operability (O) may be adopted as the verification level of the security status of vehicle 10. Moreover, the level corresponding to LV3 or higher that is associated with finance (F) may be adopted as the verification level of the security status of the access source.

For example, the verification levels may be defined based on the table illustrated in FIG. 28 instead of the table illustrated in FIG. 27.

The table illustrated in FIG. 28 may be stored in the memory of central ECU 100, for example.

### [Variation]

A variation of connected car system 1 is next described. Note that in the following description of Variation, differences from connected car system 1 are mainly described and overlapping explanation may be omitted or simplified in whole or in part.

FIG. 29 is a diagram of an overall configuration of connected car system 1a according to Variation. To be more specific, FIG. 29 is a diagram of an overall configuration when a device other than user terminal 50 illustrated in FIG. 1 accesses a function of vehicle 10.

Connected car system 1a includes vehicle 10, vehicle 10b, management center 30, roadside unit 60, and external connection device 70.

Vehicle 10, vehicle 10b, and roadside unit 60 communicate with each other via network 40. Furthermore, vehicle 10, vehicle 10b, and management center 30 communicate with each other via network 20.

Roadside unit 60 is a device that obtains data on vehicle 10 and that determines, for example, a congested situation or a traffic situation. Furthermore, roadside unit 60 notifies vehicle 10 about the traffic situation, for example.

External connection device 70 is an aftermarket part that obtains data on vehicle 10 and that determines a failed state or operating status to provide a service.

For example, each of vehicle 10b, roadside unit 60, and external connection device 70 is an access source and make an access request to, for example, change display on the display of vehicle 10. In response to this access request, vehicle 10 determines whether to permit the access, for example. In this way, the access source may be not only user terminal 50 illustrated in FIG. 1 but also any device.

### [Conclusion]

FIG. 30 is a flowchart of a procedure for processing performed by the access permission device according to Embodiment. In Embodiment described above, the access permission device is central ECU 100. To be more specific, FIG. 30 is a diagram illustrating a procedure for processing performed by central ECU 100.

The access permission device first obtains, from an access source, an access request to access an access destination included in a mobility entity (S10).

The access source is a device, such as user terminal 50, that is external to vehicle 10. The mobility entity is vehicle 10 described above, for example. The access destination is a device, such as ECU 200a, that is included in the mobility entity and communicatively connected to an in-vehicle communication network.

The access permission device next permits the access source to access the function of the access destination, based on the first verification result of the security status of the access source and the second verification result of the security status of the mobility entity, the security status of the mobility entity depending on this function (S20).

The function of the access destination is executed by, for example, ECU 200a. The access request is information for allowing the access source to cause the access destination to execute the aforementioned function or change the details of the aforementioned function, for example.

For example, when obtaining the access request, the access permission device determines whether to permit the access source to access the function of the access destination, based on the first verification result and the second verification result. When the access permission device determines to permit the access, the access destination executes this function based on the information from the access source, for example. In contrast, when the access permission device determines not to permit the access, the access destination does not execute this function based on the information from the access source, for example.

### [Advantageous effects etc.]

The following describes an example of technology obtained from the disclosure of the present specification and also describes advantageous effects obtained from the technology.

Technique 1 is an access permission device including: an obtainer that obtains, from an access source, an access request to access an access destination included in a mobility entity; and a permitter that permits the access source to access a function of the access destination, based on a first verification result of first verification of a security status of the access source and a second verification result of second verification of a security status of the mobility entity, the security status of the mobility entity depending on the function of the access destination.

The obtainer and the permitter are processors included in central ECU 100 and correspond to vehicle function enablement determiner 102 in Embodiment described above. For example, when the obtainer obtains the access request, the permitter determines, based on the first verification result and the second verification result, whether to permit the access source to access the function of the access destination. For example, when the permitter determines to permit the access, the access destination executes this function based on the information from the access source. In contrast, for example, when the permitter does not permit the access, the access destination does not execute this function based on the information from the access source.

This type of permission device has conventionally performed the verification of the access source, but has not performed the verification of the function of the access destination. Depending on the function of the access destination, serious damage may possibly occur when this function is no longer properly operating due to an attack from outside, for example. In response to this, the access permission device according to one aspect of the present disclosure determines whether to permit the access request from the access source, based on not only the access source but also the function of the access destination. This allows the mobility entity to be easily kept secure.

Technique 2 is the access permission device according to Technique 1, wherein the permitter performs the first verification of the security status of the access source by determining whether a user of the access source is a predetermined user and whether the user of the access source has authorization to access the function, and the permitter performs the second verification of the security status of the mobility entity, based on whether a version of software installed on an ECU (for example, ECU 200a in Embodiment described above) included in the mobility entity is latest.

The version of the software installed on the ECU is the version of the software that is stored in the memory of the ECU and that is used in the processing performed by this ECU. Note that the mobility entity may include a timer, such as an RTC, that measures time. Information relating to time may be obtained from management center 30, for example.

For example, the verification of the security status of the access source includes authentication of the access source and authorization for the access source. The authentication of the access source is performed by determining whether the user of the access source is the predetermined user, for example. The authorization for the access source is performed by determining whether the user of the access source has the authorization to access this function, for example.

With this, the permission for access is determined based on the version of the software. For example, when the version is considered too old and thus less secure, the access is not permitted. This allows the security to increase according to the version of the software. Furthermore, the verification performed for both the access source and the access destination allows the security of the mobility entity to further increase.

Technique 3 is the access permission device according to Technique 1 or 2, wherein the permitter performs the first verification of the security status of the access source by determining whether a user of the access source is a predetermined user and whether the user of the access source has authorization to access the function, and the permitter performs the second verification of the security status of the mobility entity, based on an elapsed time since a last checking of a latest version of software installed on an ECU included in the mobility entity.

With this, the permission for access is determined based on the version of the software. For example, when the version is considered too old and thus less secure, the access is not permitted. This allows the security to increase according to the version of the software. Furthermore, the verification performed for both the access source and the access destination allows the security of the mobility entity to further increase.

Technique 4 is the access permission device according to any one of Techniques 1 to 3, wherein the function of the access destination is classified into safety (S), finance (F), operability (O), or privacy (P), based on an impact that occurs when the function is compromised, and the permitter performs the second verification of the security status of the mobility entity when the function of the access destination relates to safety (S) or operability (O).

"When a function is compromised" refers to a case where the access destination receives a certain attack from the access source, for example.

The function relating to safety (S) or operability (O) is considered more likely to cause serious damage when not operating properly, as compared with finance (F) or privacy (P). Thus, this allows the possibility of particularly serious damage to be reduced.

Technique 5 is the access permission device according to any one of Techniques 1 to 4, wherein the permitter determines a first verification level required for the first verification result regarding the security status of the access source and a second verification level required for the second verification result regarding the security status of the mobility entity, based on the classification of the function of the access destination, and the permitter permits the access source to access the function when the first verification result satisfies the first verification level and the second verification result satisfies the second verification level.

With this, based on the first verification level and the second verification level that are appropriately set, the access is permitted corresponding to the access source and the function of the access destination.

Technique 6 is the access permission device according to Technique 3, wherein the permitter further determines a threshold value of the elapsed time based on a usage frequency of the function of the access destination, and the permitter performs the second verification of the security status of the mobility entity, based on the elapsed time and the threshold value.

For example, a high usage frequency of the function of the access destination indicates that this software is used frequently. Thus, the access permission is considered less likely to cause serious damage. In view of this, the threshold value of the elapsed time since the last checking of the latest version is determined according to the usage frequency of the function of the access destination. This allows the verification of the security status of the mobility entity to be performed based on the appropriate threshold value.

Technique 7 is the access permission device according to any one of Techniques 1 to 6, further including: a user policy receiver that receives a user policy set by a user, wherein the permitter: determines a first verification level required for the first verification result regarding the security status of the access source, based on the classification of the function of the access destination; determines a second verification level required for the second verification result regarding the security status of the mobility entity, based on the user policy; and permits the access source to access the function when the first verification result satisfies the first verification level and the second verification result satisfies the second verification level.

For example, the user policy is information that indicates a standard freely set by the user and used by the permitter to determine whether to grant permission depending on the function of the mobility entity. For example, the user policy is the information indicating the user policy in FIG. 15. The user policy receiver corresponds to user terminal communicator 103 in Embodiment described above.

With this, the security at the level desired by the user can be achieved.

Technique 8 is the access permission device according to any one of Techniques 1 to 7, wherein the permitter performs the second verification of the security status of the mobility entity when the function of the access destination relates to running of the mobility entity.

The function relating to running of the mobility entity is considered likely to cause serious damage when not operating properly. Thus, this allows the possibility of particularly serious damage to be reduced.

Technique 9 is the access permission device according to any one of Techniques 1 to 8, wherein, depending on an elapsed time since a last checking of a latest version of software installed on an ECU included in the mobility entity, the permitter changes at least one of: content of a warning to a user; a method of checking the latest version; a frequency of checking the latest version; or timing of checking the latest version.

It is considered that the longer the elapsed time since the last checking of the latest version of the software, the older the version of the software used by the ECU, or more specifically, the less likely the version is to be latest. To be more specific, it is considered that the longer the elapsed time since the last checking of the latest version of the software, the lower the security of the software used by the ECU. Thus, for example, when the elapsed time since the last checking of the latest version of the software is longer: the content of the warning to the user may be displayed in red to call more attention of the user; the checking of the latest version may be enabled through various communication paths by, for example, allowing the method of checking the latest version to be changed from the communication between the mobility entity (vehicle 10 in the above example) and management center 30 to the communication among the mobility entity, user terminal 50, and management center 30; or more frequent checking of the latest version may be encouraged. This can prevent a situation where the version of the software used by the ECU is not latest.

Technique 10 is an access permission method that is executed by a computer and includes: obtaining, from an access source, an access request to access an access destination included in a mobility entity; and permitting the access source to access a function of the access destination, based on a first verification result of first verification of a security status of the access source and a second verification result of second verification of a security status of the mobility entity, the security status of the mobility entity depending on the function of the access destination.

The access permission method described above produces the same advantageous effects as those produced by the access permission device according to an aspect of the present disclosure.

Technique 11 is a program for causing a computer to execute the access permission method according to Technique 10.

The program described above produces the same advantageous effects as those produced by the access permission device according to an aspect of the present disclosure.

The general or specific aspects described above may be realized by a system, a method, an integrated circuit, a computer program, or a non-transitory computer-readable recording medium such as a Compact Disc Read-Only Memory (CD-ROM) or may be realized by any combination of the system, the method, the integrated circuit, the computer program, and the recording medium.

### (OTHER EMBODIMENTS)

Although the present disclosure has been described based on an embodiment, the present disclosure is not limited to this embodiment.

For example, the connected car system may include not only the in-vehicle communication network system but also another mobility network system and/or a control network system. A communication standard for communication performed by such a system is not intended to be particularly limiting. Furthermore, the architecture of the in-vehicle communication network is not limited to the example illustrated in FIG. 2.

Furthermore, distributed processing may be performed to allow the function enablement determination processing (the processing performed by the vehicle function enablement determiner included in central ECU 100 as described above) to be performed by the ECUs included in the vehicle.

For example, the communication method and the communication standard used between the devices in Embodiment described above are not intended to be particularly limiting. Wireless or wired communication may be performed between the devices. Alternatively, a combination of wireless and wired communications may be performed between the devices.

Furthermore, all the numerical values indicated in the above are examples for explaining the present disclosure in detail, and do not limit the present disclosure.

The dividing of the functional blocks in each of the block diagrams is one example. It is possible that a plurality of functional blocks are implemented into a single functional block, that a single functional block is divided into a plurality of functional blocks, and that a function executed by a functional block is partially executed by another functional block. Furthermore, similar functions of a plurality of functional blocks may be executed by a single hardware or software in parallel or by time division.

An order of performing the steps in each of the flowcharts is an example for explaining the present disclosure in detail. The steps may be performed in different orders. Different steps among the steps may be performed simultaneously, in other words, in parallel.

For example, how to allocate the constituent elements included in each of the devices described according to the above embodiments to a plurality of devices is not limited without materially departing from the scope of the present disclosure.

In the above-described embodiment, steps in the processing performed by a certain constituent element may be performed by another constituent element, an order of steps may be changed, or a plurality of steps may be performed in parallel.

Each of the constituent elements (the processing units) in the above embodiment may be realized by executing a software program suitable for the constituent element. Each of the constituent elements may be realized by means of a program executing unit, such as a Central Processing Unit (CPU) or a processor, reading and executing the software program recorded on a recording medium such as a hard disk or semiconductor memory.

Each of the constituent elements may be implemented to a hardware. The constituent elements may be implemented to circuits (or integrated circuits). These circuits may form a single circuit, or serve as separate circuits. Each circuit may be may be a general-purpose circuit or a dedicated circuit.

Furthermore, in Embodiment described above, vehicle 10 that is an example of the mobility entity is an automobile and the cyber security measures for the network installed on the automobile have been described thus far. However, the scope of application is not limited to this.

The present disclosure may be applied not only to an automobile, but also to a mobility entity, such as a construction machine, an agricultural machine, a ship, a train, or an aircraft. To be more specific, the mobility entity may be an automobile, a construction machine, an agricultural machine, a ship, a train, or an aircraft, for example. Hence, the present disclosure is applicable as the cyber security measures for a mobility network and a mobility network system.

Furthermore, the present disclosure may be applied to a communication network used in an industrial control system included in, for example, a factory or a building. Moreover, the present disclosure may be applied to a communication network for controlling an embedded device.

In addition, the present disclosure may include embodiments obtained by making various modifications on the above embodiment which those skilled in the art will arrive at, or embodiments obtained by selectively combining the constituent elements and functions disclosed in the above embodiment, without materially departing from the scope of the present disclosure.

### [Industrial Applicability]

The present disclosure is applicable to a control device that controls a vehicle.

### [Reference Signs List]

- 1, 1a: connected car system
- 10, 10b: vehicle
- 20, 40: network
- 30: management center
- 50: user terminal
- 60: roadside unit
- 70: external connection device
- 100: central ECU
- 101: center communicator
- 102: vehicle function enablement determiner
- 103: user terminal communicator
- 104: vehicle network communicator
- 105: user interface
- 106: function usage frequency holder
- 107: update checking history holder
- 108: vehicle configuration information holder
- 200a, 200b: ECU
- 201a: app unit
- 202a, 301, 401: communicator
- 203a: version holder
- 302: update determiner
- 303: license information holder
- 304: center private key holder
- 305: software holder
- 306: software list holder
- 402: vehicle communication app unit
- 403: server communication app unit
- 404: user policy holder
- 405: user driving tendency holder
- 406: license certificate holder

## Claims

1. An access permission device comprising:
an obtainer that obtains, from an access source, an access request to access an access destination included in a mobility entity; and
a permitter that permits the access source to access a function of the access destination, based on a first verification result of first verification of a security status of the access source and a second verification result of second verification of a security status of the mobility entity, the security status of the mobility entity depending on the function of the access destination.

2. The access permission device according to claim 1,
wherein the permitter performs the first verification of the security status of the access source by determining whether a user of the access source is a predetermined user and whether the user of the access source has authorization to access the function, and
the permitter performs the second verification of the security status of the mobility entity, based on whether a version of software installed on an electronic control unit (ECU) included in the mobility entity is latest.

3. The access permission device according to claim 1,
wherein the permitter performs the first verification of the security status of the access source by determining whether a user of the access source is a predetermined user and whether the user of the access source has authorization to access the function, and
the permitter performs the second verification of the security status of the mobility entity, based on an elapsed time since a last checking of a latest version of software installed on an ECU included in the mobility entity.

4. The access permission device according to claim 1,
wherein the function of the access destination is classified into safety, finance, operability, or privacy, based on an impact that occurs when the function is compromised, and
the permitter performs the second verification of the security status of the mobility entity when the function of the access destination relates to safety or operability.

5. The access permission device according to claim 4,
wherein the permitter determines a first verification level required for the first verification result regarding the security status of the access source and a second verification level required for the second verification result regarding the security status of the mobility entity, based on the classification of the function of the access destination, and
the permitter permits the access source to access the function when the first verification result satisfies the first verification level and the second verification result satisfies the second verification level.

6. The access permission device according to claim 3,
wherein the permitter further determines a threshold value of the elapsed time based on a usage frequency of the function of the access destination, and
the permitter performs the second verification of the security status of the mobility entity, based on the elapsed time and the threshold value.

7. The access permission device according to claim 4, further comprising:
a user policy receiver that receives a user policy set by a user,
wherein the permitter:
determines a first verification level required for the first verification result regarding the security status of the access source, based on the classification of the function of the access destination;
determines a second verification level required for the second verification result regarding the security status of the mobility entity, based on the user policy; and
permits the access source to access the function when the first verification result satisfies the first verification level and the second verification result satisfies the second verification level.

8. The access permission device according to claim 1,
wherein the permitter performs the second verification of the security status of the mobility entity when the function of the access destination relates to running of the mobility entity.

9. The access permission device according to any one of claims 1 to 8,
wherein, depending on an elapsed time since a last checking of a latest version of software installed on an ECU included in the mobility entity, the permitter changes at least one of: content of a warning to a user; a method of checking the latest version; a frequency of checking the latest version; or timing of checking the latest version.

10. An access permission method executed by a computer, the access permission method comprising:
obtaining, from an access source, an access request to access an access destination included in a mobility entity; and
permitting the access source to access a function of the access destination, based on a first verification result of first verification of a security status of the access source and a second verification result of second verification of a security status of the mobility entity, the security status of the mobility entity depending on the function of the access destination.

11. A program for causing a computer to execute the access permission method according to claim 10.
